# EUROPEAN PATENT APPLICATION

(11) **EP 4 686 168 A1**
(43) Date of publication of application: **28.01.2026**
(21) Application number: 24784239.6
(22) Date of filing: 01.04.2024
(51) Int. Cl.: H04L 47/32, H04W 28/00

(54) **METHOD FOR DISCARDING PACKET, AND COMMUNICATION APPARATUS**

(30) Priority: 06.04.2023 CN 202310412486
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Goddar, Heinz J.
(86) International application number: PCT/CN2024/085366
(87) International publication number: WO 2024/208155

(57) **Abstract**

This application provides a packet discarding method and a communication apparatus, and relates to the communication field. The method includes: A second communication apparatus sends first indication information to a first communication apparatus, where the first indication information indicates to adjust duration of a discard timer that is at a PDCP layer and that corresponds to first data to second duration, and the first data is a first data packet or first data packet set of target importance; and the first communication apparatus adjusts the duration of the discard timer from first duration to the second duration based on the first indication information. According to the method, the first communication apparatus can quickly and flexibly adjust the duration of the discard timer for the first data, to adapt to different communication environments, increase an effective capacity of a system, and improve user experience. For example, in a scenario in which network congestion occurs, duration of a discard timer for data of low importance may be shortened. In this way, the data of low importance can be preferentially discarded, to ensure that data of high importance can be successfully transmitted.

## Description

This application claims priority to Chinese Patent Application No. 202310412486.9, filed with the China National Intellectual Property Administration on April 6, 2023 and entitled "PACKET DISCARDING METHOD AND COMMUNICATION APPARATUS", which is incorporated herein by reference in its entirety.

### TECHNICAL FIELD

This application relates to the communication field, and specifically, to a packet discarding method and a communication apparatus.

### BACKGROUND

Extended reality (extended reality, XR) refers to various environments that combine reality and virtuality and that are generated by wearable devices by using computing technologies, and human-computer interaction. XR includes augmented reality (augmented reality, AR), mixed reality (mixed reality, MR), and virtual reality (virtual reality, VR).

Packet discard behavior at a packet data convergence protocol (packet data convergence protocol, PDCP) layer is specified in the 3rd Generation Partnership Project (3rd Generation Partnership Project, 3GPP) protocol. Specifically, each time a PDCP entity at the PDCP layer on a transmitter side receives a PDCP service data unit (service data unit, SDU) from an upper layer (for example, a service data adaptation protocol (service data adaptation protocol, SDAP) layer), the PDCP entity starts a timer for the PDCP SDU. When the timer expires, the PDCP entity discards the PDCP SDU corresponding to the timer and a PDCP protocol data unit (protocol data unit, PDU) corresponding to the SDU. If the PDCP PDU has been delivered to a lower layer (for example, a radio link control (radio link control, RLC) layer), the PDCP entity further notifies the lower layer of a packet discard indication, and the lower layer performs a corresponding packet discard operation. A network device configures duration of the timer for each PDCP entity. The PDCP discards different to-be-transmitted data packets in a same quality of service (quality of service, QoS) flow after waiting for same time.

The packet discard mechanism may reduce an effective capacity of a network in some scenarios. For example, in an XR service, one piece of I-frame (intra-coded picture) data and one piece of P-frame (predictive-coded picture) data are waiting to be transmitted in a buffer, and the P-frame data is before the I-frame data. It is assumed that congestion occurs in this case, and consequently available transmission resources are very limited. In this case, in a process of transmitting the P-frame data, the subsequent I-frame data may be discarded due to a timeout. Consequently, even if the P-frame data that depends on the I-frame is correctly transmitted, the P-frame data cannot be successfully parsed subsequently. As a result, the effective capacity of the network is reduced, affecting user experience.

### SUMMARY

This application provides a packet discarding method and a communication apparatus, to increase an effective capacity of a system and improve user experience.

According to a first aspect, a packet discarding method is provided. The method may be performed by a first communication apparatus (namely, a data sender), or may be performed by a component (for example, a processor, a chip, or a chip system) of the first communication apparatus, or may be implemented by a logic module or software that can implement all or a part of functions of the first communication apparatus.

The method includes: receiving first indication information from a second communication apparatus, where the first indication information indicates to adjust duration of a discard timer that is at a PDCP layer and that corresponds to first data to second duration, and the first data is a first data packet or first data packet set of target importance; and adjusting the duration of the discard timer from first duration to the second duration based on the first indication information.

It should be understood that the first duration is duration of the discard timer before the duration of the discard timer is adjusted based on the first indication information.

For example, any data packet set, for example, the first data packet set, may be a PDU set (set), or may be a data burst (data burst).

According to the method provided in this application, the first communication apparatus can quickly and flexibly adjust duration of a discard timer for some data (for example, the first data) based on an indication of the second communication apparatus, to adapt to different communication environments, increase an effective capacity of a system, and improve user experience. For example, in a scenario in which network congestion occurs, the second communication apparatus may indicate the first communication apparatus to shorten duration of a discard timer for some data of low importance. In this way, the first communication apparatus can preferentially discard the data of low importance, to alleviate network resource pressure, and ensure that data of high importance can be successfully transmitted. For example, when a network condition is good, the second communication apparatus may indicate the first communication apparatus to prolong a timer for some data of high importance. In this way, the first communication apparatus can provide more transmission opportunities for the data of high importance, to ensure successful transmission of the data of high importance, so as to ensure that other data that depends on the data can be successfully decoded subsequently.

In a possible implementation, the first data is a first data packet of low importance or a first data packet set of low importance, and the first duration is greater than the second duration.

According to this solution, the first communication apparatus may preferentially discard the first data packet/first data packet set of low importance by shortening duration of a discard timer for the first data packet/first data packet set of low importance based on the first indication information, to provide more transmission opportunities for data packets/data packet sets of high importance. When network congestion occurs, this solution helps alleviate network resource pressure and ensure successful transmission of the data of high importance. This helps increase an effective capacity of a network and improve user experience.

In a possible implementation, importance of any data packet is determined based on PDU set importance (PDU set importance, PSI) corresponding to the data packet and/or a remaining transmission delay budget corresponding to the data packet; and/or importance of any data packet set is determined based on PSI corresponding to the data packet set and/or a remaining transmission delay budget corresponding to the data packet set.

For example, PSI corresponding to a data packet may be PSI of a PDU set to which the data packet belongs.

For example, a remaining transmission delay budget corresponding to a data packet is a remaining packet delay budget (packet delay budget, PDB) of the data packet.

For example, a remaining transmission delay budget of a PDU set may be a remaining PSDB of the PDU set.

In a possible implementation, the first indication information indicates that the second duration is a default value 0.

For example, when network congestion occurs, the second communication apparatus expects the first communication apparatus to discard a data packet/data packet set of low importance. In this case, the second communication apparatus sends the first indication information to the first communication apparatus, to indicate the first communication apparatus to adjust duration of a discard timer for the data packet/data packet set of low importance to 0. After receiving the first indication information, the first communication apparatus adjusts, to 0, discard timers corresponding to all data packets/data packet sets of low importance cached in a related PDCP entity, so that the data packets/data packet sets of low importance are discarded because the discard timers for the data packets/data packet sets of low importance expire immediately. For a data packet/data packet set of low importance that subsequently reaches the related PDCP entity, the first communication apparatus starts a discard timer whose duration is 0. In other words, the data packet/data packet set is immediately discarded after reaching the PDCP entity. According to the method, network congestion can be effectively alleviated, and transmission of a data packet/data packet set of high importance can be ensured.

In a possible implementation, the first indication information includes the second duration.

In a possible implementation, the first indication information indicates the second duration in a plurality of pieces of preconfigured duration.

In a possible implementation, the first indication information includes information about the target importance and the second duration.

In a possible implementation, the first indication information includes information about the target importance, and the second duration is associated with the target importance. For example, correspondences between a plurality of pieces of duration and information about importance may be preconfigured for the first communication apparatus. In this way, the first communication apparatus can determine the second duration based on the information about the target importance.

In a possible implementation, adjusting the duration of the discard timer from the first duration to the second duration based on the first indication information includes: adjusting the duration of the discard timer from the first duration to the second duration based on PSI of the target importance and a PSI threshold.

According to this solution, the second duration may be determined based on the PSI of the target importance and the PSI threshold.

In a possible implementation, the first indication information further indicates a data radio bearer (data radio bearer, DRB) associated with the first data.

According to this solution, the second communication apparatus may indicate to adjust only discard timers for related data of PDCP entities corresponding to some DRBs.

In a possible implementation, the first data is data that has reached the PDCP entity. Adjusting the duration of the discard timer from the first duration to the second duration based on the first indication information includes: restarting the discard timer based on the first indication information and the second duration; or continuing to run the discard timer based on the first indication information and the second duration, or determining, based on the first indication information and the second duration, that the discard timer expires.

In a possible implementation, the first data is data that has not reached the PDCP entity. Adjusting the duration of the discard timer from the first duration to the second duration based on the first indication information includes: starting the discard timer based on the first indication information and the second duration when the first data reaches the PDCP entity.

In a possible implementation, the method further includes: for second data that has not reached the PDCP entity, starting a discard timer based on first duration when the second data reaches the PDCP entity, where the second data is a second data packet or second data packet set of target importance.

In a possible implementation, the method further includes: receiving second indication information from the second communication apparatus, where the second indication information indicates to adjust the duration of the discard timer from the second duration to the first duration; and adjusting the duration of the discard timer from the second duration to the first duration.

In a possible implementation, the method further includes: starting a first timer when the first indication information is received, where the duration of the discard timer is the second duration during running of the first timer; and adjusting the duration of the discard timer from the second duration to the first duration when the first timer expires.

According to this solution, the first communication apparatus may adjust the discard timer for the first data based on the first indication information during running of the first timer, and adjust the duration of the discard timer back to the first duration when the first timer expires.

In a possible implementation, the method further includes: sending a buffer status report to the second communication apparatus when the first data is discarded, where the buffer status report is used to report an amount of current to-be-transmitted data.

According to this solution, after learning of the amount of the current to-be-transmitted data of the first communication apparatus based on the buffer status report, the second communication apparatus may configure, for the first communication apparatus, transmission resources that match the amount of the current to-be-transmitted data. This facilitates successful transmission of a data packet of the first communication apparatus, and avoids a waste of network resources.

According to a second aspect, a packet discarding method is provided. The method may be performed by a second communication apparatus (namely, a data receiver), or may be performed by a component (for example, a processor, a chip, or a chip system) of the second communication apparatus, or may be implemented by a logic module or software that can implement all or a part of functions of the second communication apparatus.

The method includes: generating first indication information, where the first indication information indicates a first communication apparatus to adjust duration of a discard timer that is at a packet data convergence protocol PDCP layer and that corresponds to first data to second duration, and the first data is a first data packet or first data packet set of target importance; and sending the first indication information to the first communication apparatus.

According to the method provided in this application, the first communication apparatus can quickly and flexibly adjust duration of a discard timer for some data (for example, the first data) based on an indication of the second communication apparatus, to adapt to different communication environments, increase an effective capacity of a system, and improve user experience. For example, in a scenario in which network congestion occurs, the second communication apparatus may indicate the first communication apparatus to shorten duration of a discard timer for some data of low importance. In this way, the first communication apparatus can preferentially discard the data of low importance, to alleviate network resource pressure, and ensure that data of high importance can be successfully transmitted. For example, when a network condition is good, the second communication apparatus may indicate the first communication apparatus to prolong a timer for some data of high importance. In this way, the first communication apparatus can provide more transmission opportunities for the data of high importance, to ensure successful transmission of the data of high importance, so as to ensure that other data that depends on the data can be successfully decoded subsequently.

In a possible implementation, the first data is a first data packet of low importance or a first data packet set of low importance, and the second duration is less than current duration of the discard timer.

In a possible implementation, importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

In a possible implementation, the first indication information indicates that the second duration is a default value 0; or the first indication information includes the second duration; or the first indication information indicates the second duration in a plurality of pieces of preconfigured duration; or the first indication information includes information about the target importance and the second duration; or the first indication information includes information about the target importance, and the second duration is associated with the target importance.

In a possible implementation, the first indication information further indicates a data radio bearer DRB associated with the first data.

In a possible implementation, the method further includes: sending second indication information to the first communication apparatus, where the second indication information indicates the first communication apparatus to adjust the duration of the discard timer from the second duration to the first duration, and the first duration is duration of the discard timer before the duration of the discard timer is adjusted to the second duration.

In a possible implementation, the method further includes: receiving a buffer status report from the first communication apparatus, where the buffer status report is used to report an amount of current to-be-transmitted data of the first communication apparatus.

In a possible implementation, the method further includes: sending duration of a first timer to the first communication apparatus, where the duration of the discard timer is the second duration during running of the first timer, the first communication apparatus needs to adjust the duration of the discard timer from the second duration to the first duration when the first timer expires, and the first duration is duration of the discard timer before the duration of the first timer is adjusted to the second duration.

In a possible implementation, before generating the first indication information, the method further includes: determining that network congestion occurs.

It should be understood that for beneficial effects of the related solutions in the second aspect, refer to the foregoing descriptions of the corresponding solutions in the first aspect. Details are not described herein again.

According to a third aspect, a packet discarding method is provided. The method may be performed by a first communication apparatus (namely, a data sender), or may be performed by a component (for example, a processor, a chip, or a chip system) of the first communication apparatus, or may be implemented by a logic module or software that can implement all or a part of functions of the first communication apparatus.

The method includes: receiving third indication information from a second communication apparatus, where the third indication information indicates to adjust, to 0, a discard timer for a data packet or data packet set of first importance that has reached at least one PDCP entity, and/or discard a data packet or data packet set of first importance that has not reached the at least one PDCP entity, or the third indication information indicates to discard data packets or data packet sets of first importance that have reached and/or have not reached the at least one PDCP entity; adjusting, to 0 based on the third indication information, the discard timer for the data packet or data packet set of first importance that has reached the at least one PDCP entity, and/or discarding the data packet or data packet set of first importance that has not reached the at least one PDCP entity; or discarding, based on the third indication information, the data packets or data packet sets of first importance that have reached and/or have not reached the at least one PDCP entity.

For example, the first importance may be low importance.

For example, any data packet set may be a PDU set (set), or may be a data burst (data burst).

According to the method provided in this application, the first communication apparatus can quickly and flexibly adjust duration of a discard timer for some data (for example, the data packet or data packet set of first importance) and/or discard some data based on an indication of the second communication apparatus, to adapt to different communication environments, increase an effective capacity of a system, and improve user experience. For example, in a scenario in which network congestion occurs, the first communication apparatus may preferentially discard data of low importance based on an indication of the first communication apparatus, to alleviate network resource pressure, and ensure that data of high importance can be successfully transmitted. In addition, the data packet or data packet set of first importance that has not reached the at least one PDCP entity is discarded, so that processing time of the first communication apparatus can be further reduced.

In a possible implementation, importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

In a possible implementation, the method further includes: receiving fourth indication information from the second communication apparatus, where the fourth indication information indicates to stop discarding the data packet/data packet set of first importance of the at least one PDCP entity; and stopping, based on the fourth indication information, discarding the data packet/data packet set of first importance of the at least one PDCP entity.

In a possible implementation, the method further includes: starting a second timer when second indication information is received; and stopping discarding the data packet/data packet set of first importance of the at least one PDCP entity when the second timer expires.

In a possible implementation, the method further includes: sending a buffer status report to the second communication apparatus when the data packet/data packet set of first importance of the at least one PDCP entity is discarded, where the buffer status report is used to report an amount of current to-be-transmitted data.

According to this solution, after learning of the amount of the current to-be-transmitted data of the first communication apparatus based on the buffer status report, the second communication apparatus may configure, for the first communication apparatus, transmission resources that match the amount of the current to-be-transmitted data. This facilitates successful transmission of a data packet of the first communication apparatus, and avoids a waste of network resources.

According to a fourth aspect, a packet discarding method is provided. The method may be performed by a second communication apparatus (namely, a data sender), or may be performed by a component (for example, a processor, a chip, or a chip system) of the second communication apparatus, or may be implemented by a logic module or software that can implement all or a part of functions of the second communication apparatus.

The method includes: generating third indication information; and sending the third indication information to a first communication apparatus. The third indication information indicates the first communication apparatus to adjust, to 0, a discard timer for a data packet or data packet set of first importance that has reached at least one PDCP entity, and/or discard a data packet or data packet set of first importance that has not reached the at least one PDCP entity, or the third indication information indicates the first communication apparatus to discard data packets or data packet sets of first importance that have reached and/or have not reached the at least one PDCP entity.

According to the method provided in this application, the first communication apparatus can quickly and flexibly adjust duration of a discard timer for some data (for example, the data packet or data packet set of first importance) and/or discard some data based on an indication of the second communication apparatus, to adapt to different communication environments, increase an effective capacity of a system, and improve user experience. For example, in a scenario in which network congestion occurs, the first communication apparatus may preferentially discard data of low importance based on an indication of the first communication apparatus, to alleviate network resource pressure, and ensure that data of high importance can be successfully transmitted. In addition, the data packet or data packet set of first importance that has not reached the at least one PDCP entity is discarded, so that processing time of the first communication apparatus can be further reduced.

In a possible implementation, importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

In a possible implementation, the method further includes: sending fourth indication information to the first communication apparatus, where the fourth indication information indicates the first communication apparatus to stop discarding the data packet/data packet set of first importance of the at least one PDCP entity.

According to a fifth aspect, a communication apparatus is provided, including a module or a unit configured to perform the method in any one of the first aspect or the possible implementations of the first aspect, or including a module or a unit configured to perform the method in any one of the third aspect or the possible implementations of the third aspect.

According to a sixth aspect, a communication apparatus is provided, including a module or a unit configured to perform the method in any one of the second aspect or the possible implementations of the second aspect, or including a module or a unit configured to perform the method in any one of the fourth aspect or the possible implementations of the fourth aspect.

According to a seventh aspect, a communication apparatus is provided, including a processor, where the processor is coupled to a memory, the memory is configured to store a computer program or instructions, and the processor is configured to execute the computer program or instructions stored in the memory, to implement the method in any one of the first aspect or the possible implementations of the first aspect, or implement the method in any one of the third aspect or the possible implementations of the third aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

In an implementation, the apparatus is a first communication apparatus. For example, the communication interface may be a transceiver or an input/output interface.

In another implementation, the apparatus is a chip in the first communication apparatus. For example, the communication interface may be an input/output interface.

According to an eighth aspect, a communication apparatus is provided, including a processor, where the processor is coupled to a memory, the memory is configured to store a computer program or instructions, and the processor is configured to execute the computer program or instructions stored in the memory, to implement the method in any one of the second aspect or the possible implementations of the second aspect, or implement the method in any one of the fourth aspect or the possible implementations of the fourth aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

In an implementation, the apparatus is a second communication apparatus. For example, the communication interface may be a transceiver or an input/output interface.

In another implementation, the apparatus is a chip in the second communication apparatus. For example, the communication interface may be an input/output interface.

According to a ninth aspect, a processor is provided, and includes an input circuit, an output circuit, and a processing circuit. The processing circuit is configured to: receive a signal via the input circuit, and transmit the signal via the output circuit, to enable the processor to perform the method in any one of the foregoing aspects or the possible implementations of any one of the foregoing aspects.

During specific implementation, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a tenth aspect, a communication system is provided, and includes at least one of the communication apparatus provided in the third aspect and the communication apparatus provided in the fourth aspect, or includes at least one of the communication apparatus provided in the fifth aspect and the communication apparatus provided in the sixth aspect.

According to an eleventh aspect, a computer program product is provided. The computer program product includes a computer program (which may also be referred to as code or instructions). When the computer program is run, a computer is enabled to perform the method in any one of the foregoing aspects or the possible implementations of any one of the foregoing aspects.

According to a twelfth aspect, a computer-readable storage medium is provided. The computer-readable storage medium stores a computer program (which may also be referred to as code or instructions). When the computer program is run on a computer, the computer is enabled to perform the method in any one of the foregoing aspects or the possible implementations of any one of the foregoing aspects.

According to a thirteenth aspect, a chip is provided, and includes a processor configured to invoke a computer program from a memory and run the computer program, to enable a communication apparatus on which the chip is mounted to perform the method in any one of the foregoing aspects or the possible implementations of any one of the foregoing aspects.

According to a fourteenth aspect, a communication apparatus is provided. The communication apparatus includes an interface and a processor. The interface is used to send and/or receive a signal, to enable the processor to perform the method in any one of the foregoing aspects or the possible implementations of any one of the foregoing aspects.

### BRIEF DESCRIPTION OF DRAWINGS

FIG. 1 shows a procedure of processing a data packet at each protocol layer on a user plane on a transmitter side;
FIG. 2 is a diagram of a video encoding model;
FIG. 3 is a block diagram of a communication system applicable to this application;
FIG. 4 is a schematic flowchart of a packet discarding method according to an embodiment of this application;
FIG. 5 is a diagram of adjusting duration of a running discard timer according to an embodiment of this application;
FIG. 6 is a diagram of adjusting duration of a running discard timer according to an embodiment of this application;
FIG. 7 is a diagram of adjusting duration of a discard timer that is not running according to an embodiment of this application;
FIG. 8 is a diagram of adjusting duration of a discard timer according to an embodiment of this application;
FIG. 9 is a diagram of adjusting duration of a discard timer that is not running according to an embodiment of this application;
FIG. 10 is a schematic flowchart of another packet discarding method according to an embodiment of this application;
FIG. 11 is a schematic flowchart of a communication method according to an embodiment of this application;
FIG. 12 is a diagram of allocating an SN by a PDCP entity to a data packet according to an embodiment of this application;
FIG. 13 is a diagram of delivering a data packet by a PDCP entity to an RLC entity according to an embodiment of this application;
FIG. 14 is a diagram of delivering a data packet by an RLC entity to a MAC entity according to an embodiment of this application;
FIG. 15 is a block diagram of a communication apparatus according to an embodiment of this application;
FIG. 16 is a block diagram of another communication apparatus according to an embodiment of this application;
FIG. 17 is a diagram of a structure of a terminal device according to an embodiment of this application; and
FIG. 18 is a diagram of a structure of a network device according to an embodiment of this application.

### DESCRIPTION OF EMBODIMENTS

The following describes the technical solutions in embodiments of this application with reference to the accompanying drawings in embodiments of this application.

In descriptions of this application, unless otherwise specified, "/" indicates an "or" relationship between associated objects. For example, A/B may indicate A or B. "And/or" in this application merely describes an association relationship between the associated objects, and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. It should be understood that in this application, descriptions similar to "in a case of...", "if...", "when...", "it is assumed that...", and the like may be used interchangeably.

A terminal device in embodiments of this application may be user equipment (UE), a station (station), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a large screen, a vehicle-mounted device, a wearable device, a terminal device in a 5G network, a terminal device in a future evolved public land mobile communication network (public land mobile network, PLMN), or the like. This is not limited in embodiments of this application.

A network device in embodiments of this application is a radio access network (radio access network, RAN) node (or device) that connects the terminal device to a wireless network, and may also be referred to as a base station. For example, the network device may be an evolved NodeB (evolved NodeB, eNodeB), a transmission reception point (transmission reception point, TRP), a next generation NodeB (next generation NodeB, gNB) in a 5G mobile communication system, a base station in a future mobile communication system or an access point (access point, AP) in a Wi-Fi system, a radio controller in a cloud radio access network (cloud radio access network, CRAN) scenario, a relay station, an access point, a vehicle-mounted device, a wearable device, or a network device in another future evolved communication system.

In a possible scenario, a plurality of RAN nodes coordinate to assist the terminal device in implementing radio access, and different RAN nodes separately implement a part of functions of a base station. For example, the RAN node (namely, the network device in this application) may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may alternatively have different names, but a person skilled in the art may understand meanings of the names. For example, in an open radio access network (open radio access network, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. Any one of the CU (or the CU-CP or the CU-UP), the DU, and the RU in this application may be implemented by using a software module, a hardware module, or a combination of a software module and a hardware module. It should be understood that a specific technology and a specific device form that are used by the network device are not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

In this application, the following first describes related concepts in this application.

### 1. Data packet

A user plane (User Plane, UP) protocol stack of a 5th generation (5th Generation, 5G) system includes a service data adaptation protocol (service data adaption protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer from top to bottom.

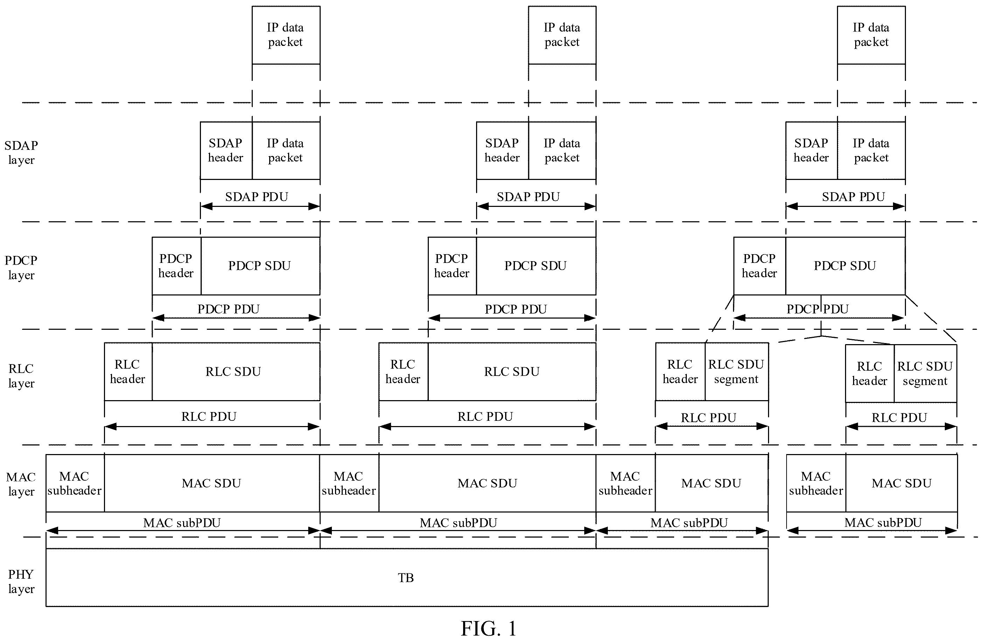

FIG. 1 shows a procedure of processing a data packet at each protocol layer on a user plane on a transmitter side. Refer to FIG. 1. On the transmitter side, a data packet first reaches an SDAP layer, and the SDAP layer delivers, according to a mapping rule from a QoS flow (flow) to a DRB, the data packet to a PDCP entity corresponding to a corresponding DRB (where each DRB corresponds to one PDCP entity). A PDCP layer performs operations such as compression and encryption on the data packet, and then delivers a processed data packet to an RLC layer. The RLC layer performs or does not perform processing such as segmentation on the data packet, and then delivers a processed data packet to a MAC layer. The MAC layer assembles one or more data packets into a MAC PDU and delivers the MAC PDU to a PHY layer.

The data packet received by the SDAP layer is an IP data packet, and at the SDAP layer, the IP data packet is referred to as an SDAP SDU. After obtaining an SDAP PDU by performing processing such as adding a header to the SDAP SDU, the SDAP layer delivers the SDAP PDU to the PDCP entity. That is, the data packet delivered by the SDAP layer to the PDCP entity is the SDAP PDU.

At the DPCP layer, the SDAP PDU is referred to as a PDCP SDU. After obtaining a PDCP PDU by performing related processing such as adding a header to the PDCP SDU, the PDCP layer delivers the PDCP PDU to the RLC layer. That is, the data packet delivered by the PDCP layer to the RLC layer is the PDCP PDU.

At the RLC layer, the PDCP PDU is referred to as an RLC SDU. The RLC layer may or may not perform segmentation processing on the RLC SDU. When the RLC SDU is segmented, each segment is referred to as an RLC SDU segment (segment). After an RLC PDU is obtained by performing related processing such as adding a header to the RLC SDU segment or the RLC SDU, the RLC PDU is delivered to the MAC layer. That is, the data packet delivered by the RLC layer to the MAC layer is the RLC PDU.

At the MAC layer, the RLC PDU is referred to as a MAC SDU. After the MAC layer obtains a MAC subPDU by performing related processing such as adding a MAC subheader to the MAC SDU, one or more MAC subPDUs form a MAC PDU, and the MAC PDU is delivered to the PHY layer. That is, the data packet delivered by the MAC layer to the PHY layer is the MAC PDU.

The PHY layer modulates and encodes the MAC PDU to generate a transport block (transport block, TB), and transmits the transport block by using an air interface resource.

### 2. PDU set (set)

The PDU set is a set including a plurality of data packets at a transport layer, and corresponds to a minimum granularity for data processing at an application layer. In some application scenarios, the application layer can correctly parse a corresponding data unit only after correctly receiving all data packets in the PDU set. In some other application scenarios, the application layer can parse a corresponding data unit after correctly receiving a specific proportion of data packets in the PDU set.

### 3. Data burst (data burst)

The data burst refers to a group of data PDUs, for example, an XR service frame, generated and transmitted by an application in an extremely short period of time. One data burst may include one or more PDU sets.

### 4. Data packet set

For example, the data packet set (for example, a first data packet set or a second data packet set) in this application may be a PDU set or a data burst.

### 5. Packet delay budget (packet delay budget, PDB)

In an uplink, the PDB is an upper limit of a transmission delay from arrival of a data packet at an access stratum of a terminal device to arrival of the data packet on an N6 interface of a user plane function (user plane function, UPF). The opposite is true in a downlink. If the data packet is not successfully transmitted within time required by the PDB, it is considered that the data packet has timed out (or referred to as expired) and is invalid.

### 6. Packet set delay budget (packet set delay budget, PSDB)

The PSDB has a similar meaning to the PDB, and defines an upper limit of a transmission delay of a group of data packets (a PDU set). In the uplink, the PSDB is an upper limit of a transmission delay from arrival of a first data packet in the PDU set at the access stratum of the terminal device to arrival of a last data packet in the PDU set on the N6 interface of the UPF. The opposite is true in the downlink.

### 7. PDU set importance (PDU set importance, PSI)

A same QoS flow may include PDU sets of different importance, and the PSI is used to identify importance of the PDU set.

For example, in the downlink, PSI of each PDU set may be provided by a core network for a network device. In uplink or sidelink (sidelink, SL) communication, the PSI may be identified by the terminal device.

XR is one of 5th generation (5th Generation, 5G) multimedia applications currently prioritized in the industrial field. Generally, an XR service periodically generates data. An AR service with a frame rate of 60 frames per second (frames per second, fps) is used as an example. 60 frames of video images are generated per second, one video frame appears approximately every 16.66 ms, and one video frame may be transmitted by using a plurality of data packets. The plurality of data packets form one or more PDU sets.

The video frame may be encoded based on a group of pictures (group of pictures, GOP), and one GOP includes several consecutive video frames. The first frame is referred to as an I-frame (intra-coded picture), uses intra-frame coding, includes complete picture information, and can be independently encoded and decoded. The other frames are referred to as P-frames (predictive-coded pictures), use predictive coding, include only a part of picture information, and can be encoded and decoded only by using a previous frame. In another encoding model, a video frame may alternatively be divided into a plurality of video slices (slices). A part of slices use intra-frame coding, and are referred to as I-slices; and a part of slices use predictive coding, and are referred to as P-slices.

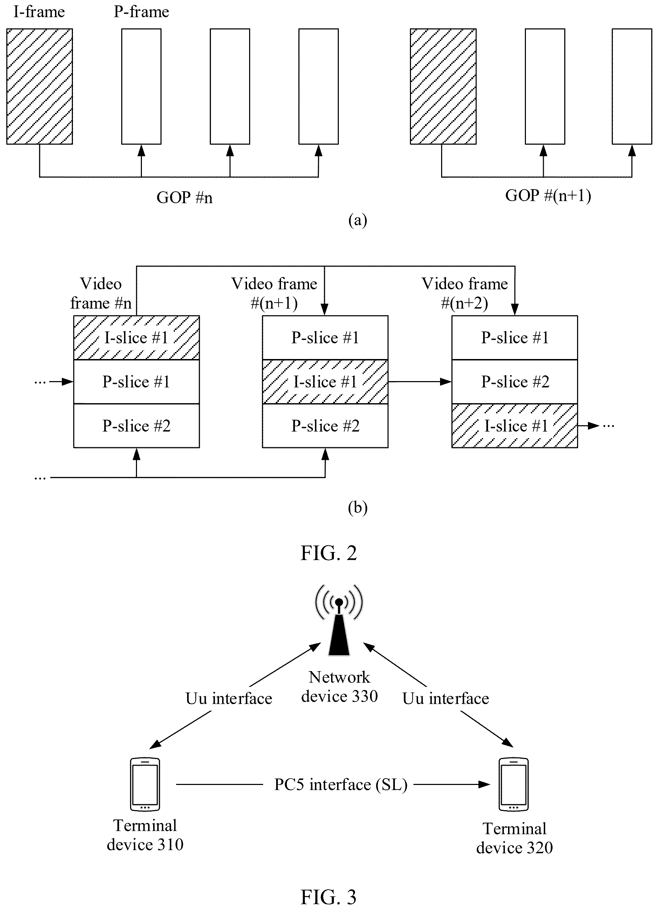

For example, FIG. 2 is a diagram of a video encoding model. (a) in FIG. 2 is a diagram of a GOP-based encoding model. Refer to (a) in FIG. 2. Three P-frames in GOP #n can be decoded depending on an I-frame in GOP #n, and two P-frames in GOP #(n+1) can be decoded depending on an I-frame in GOP #(n+1). (b) in FIG. 2 is a diagram of a slice-based encoding model. Refer to (b) in FIG. 2. P-slice #1 and P-slice #2 in video frame #n can be decoded depending on an I-slice in a video frame before video frame #n. P-slice #1 in video frame #(n+1) can be decoded depending on I-slice #1 in video frame #n, and P-slice #2 in video frame #(n+1) and P-slice #2 in video frame #n depend on the same I-slice. P-slice #1 in video frame #(n+2) can be decoded depending on I-slice #1 in video frame #n, P-slice #2 in video frame #(n+2) can be decoded depending on I-slice #1 in video frame #(n+1), and P-slice #1 in a video frame after video frame #(n+2) depends on I-slice #2 in video frame #(n+2).

The 3GPP protocol specifies packet discard behavior at a PDCP layer. Specifically, each time a PDCP entity on a transmitter side receives a PDCP SDU from an upper layer (for example, an SDAP layer), the PDCP entity starts a timer for the PDCP SDU, and the timer is denoted as a discard timer (discardTimer). When the discard timer expires, the PDCP entity discards the PDCP SDU corresponding to the timer and a PDCP PDU corresponding to the SDU. If the PDCP PDU has been delivered to a lower layer (for example, an RLC layer), the PDCP entity further notifies the lower layer of a packet discard indication, and the lower layer performs a corresponding packet discard operation.

Duration of the discard timer is configured by a network device. Specifically, the network device configures the duration by using PDCP-config signaling. Each PDCP entity configures one piece of duration. For all data packets processed by the PDCP entity, a discard timer has a same length. Generally, the network device may configure the discard timer based on a PDB or a PSDB of data.

In a current PDCP packet discard mechanism, a data timeout is considered. For different to-be-transmitted data packets in a same QoS flow, the PDCP discards the data packets after waiting for same time. This packet discard mechanism may reduce an effective capacity of a network in some scenarios. For example, in a buffer (buffer) of the PDCP entity, one piece of I-frame data and one piece of P-frame data are waiting to be transmitted, and the P-frame data is before the I-frame data. It is assumed that congestion occurs in this case, and available transmission resources are very limited. In a process of transmitting the P-frame data, the subsequent I-frame data may be discarded due to a timeout. Consequently, even if the P-frame data that depends on the I-frame is correctly transmitted, the P-frame data cannot be successfully parsed subsequently. As a result, user experience deteriorates.

In view of this, according to a packet discarding method provided in this application, the discard timer at the PDCP layer is flexibly adjusted based on importance of data, so that a first communication apparatus (namely, the transmitter side) can flexibly perform packet discard processing in different scenarios, to increase the effective capacity of the network and improve user experience. For example, in a congestion scenario or the like, the first communication apparatus may preferentially discard a data packet of low importance by shortening duration of a discard timer for the data packet of low importance (for example, the P-frame data), to ensure transmission of a data packet of high importance (for example, the I-frame data).

The technical solutions in embodiments of this application may be used in an uplink communication scenario, or may be used in a vehicle-to-everything (vehicle-to-everything, V2X) communication scenario. For example, V2X may include vehicle-to-vehicle (vehicle-to-vehicle, V2V) communication, vehicle-to-pedestrian (vehicle-to-pedestrian, V2P) communication, a vehicle-to-network (vehicle-to-network, V2N) service, vehicle-to-infrastructure (vehicle-to-infrastructure, V2I) communication, or the like.

Uplink communication or V2X communication may be implemented by using long term evolution (long term evolution, LTE), 5th generation (5th Generation, 5G), new radio (New Radio, NR), another communication technology that may emerge in the future, or the like.

FIG. 3 is a block diagram of a communication system applicable to this application. Refer to FIG. 3. The system includes two types of communication interfaces: a PC5 interface and a Uu interface. The PC5 interface is a direct communication interface between two terminal devices (for example, a terminal device 310 and a terminal device 320 shown in the figure). A direct communication link between terminal devices is also defined as a side link or a sidelink (sidelink, SL). The Uu interface is an interface for communication between a terminal device (for example, the terminal device 310 or the terminal device 320) and a network device 330. It should be understood that the communication system shown in FIG. 3 may further include more network nodes, for example, more terminal devices or network devices, which are not shown one by one in the figure in embodiments of this application.

The method provided in this application may be applied to a scenario in which the terminal device 310 (or the terminal device 320) sends data to the network device 330. In this scenario, a first communication apparatus in this application may be the terminal device 310 (or the terminal device 320), and a second communication apparatus may be the network device 330. The method provided in this application may alternatively be applied to an SL communication scenario. For example, in a scenario in which the terminal device 310 needs to send data to the terminal device 320, the first communication apparatus may be the terminal device 310, and the second communication apparatus may be the terminal device 320. Alternatively, in a scenario in which the terminal device 320 needs to send data to the terminal device 310, the first communication apparatus may be the terminal device 320, and the second communication apparatus may be the terminal device 310. In an SL scenario, the first communication apparatus and the second communication apparatus may be of a same type or different types. For example, the two communication apparatuses are both mobile phones, or one is a mobile phone, and the other is a notebook computer.

The following describes in detail the solution provided in this application with reference to corresponding flowcharts. In the method described below, the first communication apparatus is a data sender, and the second communication apparatus is a data receiver. It may be understood that in the schematic flowcharts provided in this application, an example in which different communication apparatuses are used as execution bodies of the interaction illustration is mainly used to illustrate the method. However, the execution bodies of the interaction illustration are not limited in this application. For example, the first communication apparatus in the schematic flowchart may alternatively be a chip, a chip system, or a processor that supports the first communication apparatus in implementing the method, or may be a logic module or software that can implement all or a part of functions of the first communication apparatus. The second communication apparatus in the schematic flowchart may alternatively be a chip, a chip system, or a processor that supports the second communication apparatus in implementing the method, or may be a logic module or software that can implement all or a part of functions of the second communication apparatus.

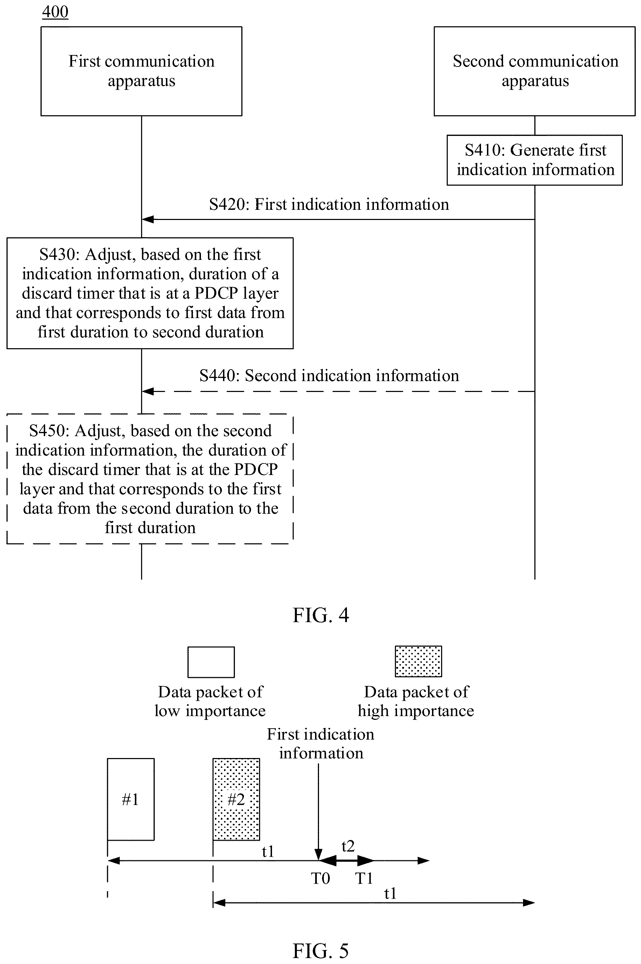

FIG. 4 is a schematic flowchart of a packet discarding method according to this application. The method 400 may include S410 to S430. Each step is described in detail below.

S410: A second communication apparatus generates first indication information.

For example, the first indication information may be a MAC CE or downlink control information (downlink control information, DCI). For example, the first indication information may be a MAC CE in a specific format (for example, a MAC CE whose logical channel identifier (logical channel identifier, LCID) is 35) or DCI in a specific format.

S420: The second communication apparatus sends the first indication information to a first communication apparatus. Correspondingly, the first communication apparatus receives the first indication information.

The first indication information indicates the first communication apparatus to adjust duration of a discard timer that is at a PDCP layer and that corresponds to first data to second duration, and the first data is a first data packet or first data packet set of target importance.

In an example, the first data packet of target importance may be a data packet of target importance that has reached the PDCP layer when the first indication information takes effect (that is, at a moment at which the first indication information starts to take effect). Alternatively, the first data packet of target importance may be a data packet of target importance that has not reached the PDCP layer when the first indication information takes effect. Alternatively, the first data packet of target importance may be data packets of target importance that have reached and have not reached the PDCP layer when the first indication information takes effect.

Similarly, the first data packet set of target importance may be a data packet set of target importance that has reached the PDCP layer when the first indication information takes effect. Alternatively, the first data packet set of target importance may be a data packet set of target importance that has not reached the PDCP layer when the first indication information takes effect. Alternatively, the first data packet set of target importance may be data packet sets of target importance that have reached and have not reached the PDCP layer when the first indication information takes effect.

It should be understood that, in this example, the first indication information is for all PDCP entities. To be specific, the first data packet/first data packet set is data packets/data packet sets of target importance that have reached and/or have not reached all PDCP entities when the first indication information takes effect.

In another example, the first indication information may further indicate at least one DRB. For example, the first indication information may include an identifier of the at least one DRB. The first data packet of target importance may be a data packet of target importance that has reached a PDCP entity corresponding to the at least one DRB when the first indication information takes effect. Alternatively, the first data packet of target importance may be a data packet of target importance that has not reached the PDCP entity corresponding to the at least one DRB when the first indication information takes effect. Alternatively, the first data packet of target importance may be data packets of target importance that have reached and have not reached the PDCP entity corresponding to the at least one DRB when the first indication information takes effect.

Similarly, the first data packet set of target importance may be a data packet set of target importance that has reached the PDCP entity corresponding to the at least one DRB when the first indication information takes effect. Alternatively, the first data packet set of target importance may be a data packet set of target importance that has not reached the PDCP entity corresponding to the at least one DRB when the first indication information takes effect. Alternatively, the first data packet set of target importance may be data packet sets of target importance that have reached and have not reached the PDCP entity corresponding to the at least one DRB when the first indication information takes effect.

It should be understood that, in this example, the first indication information is for the PDCP entity corresponding to the at least one DRB. To be specific, the first data packet/first data packet set is data packets/data packet sets of target importance that have reached and/or have not reached the PDCP entity corresponding to the at least one DRB when the first indication information takes effect.

It should be noted that, for ease of description below, the PDCP entity corresponding to the at least one DRB is referred to as a specified PDCP entity.

The moment at which the first indication information starts to take effect may be a moment at which the first indication information reaches the first communication apparatus or a moment at which the first communication apparatus receives (or received) or correctly decodes the first indication information. Alternatively, the first indication information may indicate a moment at which the first indication information takes effect. For example, the first indication information may indicate that the first indication information takes effect 10 ms after the first communication apparatus receives the first indication information.

S430: The first communication apparatus adjusts, based on the first indication information, the duration of the discard timer that is at the PDCP layer and that corresponds to the first data from first duration to the second duration.

It may be understood that the first duration is duration of the discard timer before adjustment, and the second duration is duration of the discard timer after adjustment. When the timer expires, the first communication apparatus discards the first data corresponding to the discard timer.

According to the method provided in this application, the first communication apparatus can flexibly perform packet discard processing in different scenarios by quickly and flexibly adjusting duration of a discard timer for some data (for example, the first data) based on an indication of the second communication apparatus, to help increase an effective capacity of a network and improve user experience.

For example, in a possible implementation, the target importance is low importance (or low importance), that is, the first data is a first data packet of low importance or a first data packet set of low importance. In addition, the second duration is less than the first duration. For example, when the first indication information is a MAC CE or DCI in a specific format, it is considered by default that the target importance indicated by the first indication information is low importance.

According to this solution, the first communication apparatus may preferentially discard the first data packet/first data packet set of low importance by shortening duration of a discard timer for the first data packet/first data packet set of low importance based on the first indication information, to provide more transmission opportunities for data packets/data packet sets of high importance. When network congestion occurs, this solution helps alleviate network resource pressure and ensure successful transmission of data of high importance. This helps increase the effective capacity of the network and improve user experience.

For example, in a scenario in which the second communication apparatus determines that network congestion occurs, the second communication apparatus may generate the first indication information and send the first indication information to the first communication apparatus.

For example, the second communication apparatus may determine, by using an algorithm of the second communication apparatus, whether network congestion occurs. For example, the second communication apparatus may determine, by comparing a quantity of available transmission resources of the second communication apparatus with an amount of to-be-transmitted data of all users in the network, whether network congestion occurs. When the amount of to-be-transmitted data is greater than the quantity of available transmission resources of the second communication apparatus in a period of time, it is considered that network congestion occurs. It should be understood that how the second communication apparatus determines whether network congestion occurs is not specifically limited in this application.

For example, importance of a data packet may be determined based on PSI corresponding to the data packet and/or a remaining transmission delay budget corresponding to the data packet. Similarly, importance of a data packet set is determined based on PSI corresponding to the data packet set and/or a remaining transmission delay budget corresponding to the data packet set. For example, the PSI corresponding to the data packet may be PSI of a PDU set to which the data packet belongs. For example, the remaining transmission delay budget corresponding to the data packet may be a remaining PDB of the data packet, and a remaining transmission delay budget of the PDU set may be a remaining PSDB of the PDU set.

For example, if a value of the PSI can be only "high (high)"and "low (low)", a PDU set whose PSI is "low" is a PDU set of low importance, and all data packets belonging to the PDU set are data packets of low importance; and a PDU set whose PSI is "high" is a PDU set of high importance, and all data packets belonging to the PDU set are data packets of high importance. For example, in an XR video stream, PSI of a PDU set corresponding to an I frame/I-slice is "high", and PSI of a PDU set corresponding to a P frame/P-slice is "low".

For example, if the PSI may have more than two values, a PDU set whose PSI reaches a specific threshold may be defined as a PDU set of high importance, and a PDU set whose PSI is less than the threshold may be defined as a PDU set of low importance. For example, a value of the PSI may be 1, 2, 3, or 4, a larger value of the PSI indicates higher importance of a PDU set corresponding to the PSI, and a defined threshold is 3. In this case, PDU sets whose PSI is 3 and 4 are PDU sets of high importance, and all data packets belonging to the PDU sets are data packets of high importance; and PDU sets whose PSI is 1 and 2 are PDU sets of low importance, and all data packets belonging to the PDU sets are data packets of low importance. For example, when the method is applied to an uplink scenario, the threshold may be pre-specified in a protocol, preconfigured by the second communication apparatus, or carried in the first indication information. For example, when the method is applied to an SL communication scenario, the threshold may be pre-specified in a protocol, preconfigured by the network device or the second communication apparatus, or carried in the first indication information. It should be understood that, that a smaller value of the PSI indicates higher importance of a PDU set corresponding to the PSI may alternatively be defined.

For example, when a remaining PDB/PSDB of a data packet/data packet set is low (for example, less than a specific threshold, where the threshold may be pre-specified in a protocol, preconfigured by the network device, or carried in the first indication information), in other words, the data packet/data packet set is about to time out, it is considered that the data packet/data packet set is of low importance, and it is considered that a data packet/data packet set with a high remaining PDB/PSDB is of high importance. In a congestion scenario, transmission resources are limited, and transmission of the data packet/data packet set with the low remaining PDB/PSDB may not be completed within a transmission delay budget. In this case, duration of a discard timer for the data packet/data packet set is shortened, and the transmission resources may be reserved for the data packet/data packet set with the high remaining PDB/PSDB. This helps ensure transmission of the data packet/data packet set with the high remaining PDB/PSDB.

For example, importance of the data packet/data packet set may be measured based on the PSI and the remaining PDB/PSDB. For example, it may be considered that a data packet/data packet set with a low remaining PDB/PSDB (for example, less than a specific threshold) and low PSI (for example, the PSI is low or is less than a specific threshold) is of low importance.

In another possible implementation, the target importance is high importance (or high importance), that is, the first data is a first data packet of high importance or a first data packet set of high importance. In addition, the second duration is greater than the first duration. For example, when the first indication information is a MAC CE or DCI in a specific format, it is considered by default that the target importance indicated by the first indication information is high importance.

For how to define or measure the importance of the data packet and data packet set, refer to the foregoing descriptions. Details are not described herein again.

According to this solution, when a network condition is good, the second communication apparatus may indicate the first communication apparatus to prolong a timer for some data of high importance. In this way, the first communication apparatus can provide more transmission opportunities for the data of high importance (for example, an I-frame), to ensure successful transmission of the data of high importance, so as to ensure that other data (for example, a P-frame) that depends on the data can be successfully decoded subsequently.

In still another possible implementation, the first indication information may include information about the target importance. According to this solution, the first communication apparatus adjusts, based on the first indication information, a discard timer for a data packet/data packet set of information whose importance is the target importance, to implement flexible packet discarding of the data packet/data packet set. For example, if importance indicated by the information about the target importance is low, data of low importance may be preferentially discarded, to reserve more transmission opportunities for a data packet of high importance. When network congestion occurs, this solution helps alleviate network resource pressure and ensure successful transmission of the data of high importance. This helps increase the effective capacity of the network and improve user experience.

For example, the information about the target importance may include one or more of the following: at least one piece of PSI (for example, PSI #1), at least one remaining transmission delay budget (for example, remaining transmission delay budget #1), or at least one remaining transmission delay budget interval (for example, remaining transmission delay budget interval #1, where remaining transmission delay budget interval #1=[a, b]). For example, a first data packet/first data packet set whose PSI is PSI #1 is the first data. For example, the information about the target importance is PSI=3 (that is, PSI #1 is 3). A first data packet/data packet set that has reached and/or has not reached the PDCP layer (all PDCP entities or specified PDCP entities) when the first indication information takes effect is the first data. For another example, a first data packet/first data packet set whose remaining transmission delay budget is less than remaining transmission delay budget #1 is the first data. For another example, a first data packet/first data packet set whose remaining transmission delay budget is in the interval [a, b] is the first data.

It should be noted that, for different PDCP entities, importance of data packets/data packet sets whose discard timers need to be adjusted may be the same or may be different. In other words, target importance corresponding to (or associated with) different PDCP entities may be the same or may be different. It is assumed that the specified PDCP entities are PDCP entity #1 and PDCP entity #2. For example, the data packets/data packet sets whose discard timers need to be adjusted are data packets/data packet sets of low importance that have reached and/or have not reached PDCP entity #1 and PDCP entity #2 when the first indication information takes effect. In other words, PDCP entity #1 and PDCP entity #2 correspond to same target importance, namely, low importance. For another example, the data packets/data packet sets whose discard timers need to be adjusted are: data packets/data packet sets whose PSI is less than 2 and that have reached and/or have not reached PDCP entity #1 when the first indication information takes effect, and data packets/data packet sets whose PSI is less than 3 and that have reached and/or have not reached PDCP entity #1 when the first indication information takes effect. In other words, DCP entity #1 and PDCP entity #2 correspond to different target importance.

The following describes how to determine the second duration by using an example.

Example 1: The first indication information indicates that the second duration is a default value, and the default value is 0. For example, when the first indication information is a MAC CE in a specific format or DCI in a specific format, the second duration is 0 by default.

For example, when network congestion occurs, the second communication apparatus expects the first communication apparatus to discard a data packet/data packet set of low importance. In this case, the second communication apparatus sends the first indication information to the first communication apparatus, to indicate the first communication apparatus to adjust duration of a discard timer for the data packet/data packet set of low importance to 0. After receiving the first indication information, the first communication apparatus adjusts, to 0, discard timers corresponding to all data packets/data packet sets of low importance cached in a related PDCP entity, so that the data packets/data packet sets of low importance are discarded because the discard timers for the data packets/data packet sets of low importance expire immediately. For a data packet/data packet set of low importance that subsequently reaches the related PDCP entity, the first communication apparatus starts a discard timer whose duration is 0. In other words, the data packet/data packet set is immediately discarded after reaching the PDCP entity. According to the method, network congestion can be effectively alleviated, and transmission of a data packet/data packet set of high importance can be ensured.

Example 2: The first indication information includes the second duration. For example, the second duration may be 0, 10 ms, 20 ms, or the like.

For example, when network congestion occurs, the second communication apparatus does not expect the first communication apparatus to directly discard all data packets/data packet sets of low importance, but indicates the first communication apparatus to adjust duration of discard timers for the data packets/data packet sets of low importance to be less than an original configured value. In this way, a part of transmission opportunities are still reserved for the data packets/data packet sets of low importance. However, because the discard timers are shorter, compared with a data packet/data packet set of high importance, the data packet/data packet set of low importance is more likely to be discarded due to a timeout. Therefore, more transmission opportunities are reserved for the data packet/data packet set of high importance.

Example 3: The first indication information may indicate the second duration in a plurality of pieces of preconfigured duration.

In other words, a plurality of pieces of duration may be preconfigured. For example, in an uplink scenario, the second communication apparatus may configure a plurality of pieces of duration by using a PDCP-config information element. Alternatively, in an SL scenario, the network device or the second communication apparatus may configure (for example, configure by using an RRC message) a plurality of pieces of duration. For example, the plurality of pieces of duration are {0 ms, 5 ms, 10 ms, 15 ms}. Then, the second communication apparatus sends the first indication information to the first communication apparatus. The first indication information may indicate one of the plurality of pieces of preconfigured duration. For example, a 2-bit (bit) field is used to indicate four pieces of preconfigured duration, for example, "01" corresponds to 5 ms in the four pieces of duration. If the first indication information further indicates at least one DRB, a plurality of pieces of duration may be preconfigured for the at least one DRB.

Example 4: The second duration is associated with the target importance, and the second communication apparatus may determine the second duration based on the target importance.

In a manner, a correspondence between importance of a data packet/data packet set and duration of a discard timer may be specified in a protocol or preconfigured by the network device (the second communication apparatus in the uplink scenario). After learning of the target importance, the second communication apparatus may determine the second duration based on the correspondence.

For example, the correspondence between the importance of the data packet/data packet set and the duration of the discard timer is shown in Table 1. It is assumed that the first indication information indicates that the target importance is low importance. In this case, it may be determined that the second duration is 10 ms.

**Table 1**

| | | |
|---|---|---|
| Importance of a data packet/data packet set | High | Low |
| Duration of a discard timer | 20 ms | 10 ms |

For example, the correspondence between the importance of the data packet/data packet set and the duration of the discard timer is shown in Table 2. A larger value of PSI indicates higher importance of the data packet/data packet set. It is assumed that the first indication information includes the information about the target importance, and the information about the target importance is PSI=1. In this case, it may be determined that the second duration is 10 ms.

**Table 2**

| | | | | |
|---|---|---|---|---|
| Importance of a data packet/data packet set | PSI=1 | PSI=2 | PSI=3 | PSI=4 |
| Duration of a discard timer | 10 ms | 15 ms | 20 ms | 25 ms |

It should be noted that, for different PDCP entities, corresponding second duration may be the same or may be different. It is assumed that the specified PDCP entities are PDCP entity #1 and PDCP entity #2. For example, second indication information may indicate that second duration corresponding to PDCP entity #1 is 10 ms, and second duration corresponding to PDCP entity #2 is 15 ms. To be specific, the first indication information indicates the first communication apparatus to adjust a discard timer for a first data packet/first data packet set of target importance corresponding to PDCP entity #1 to 10 ms, and indicates the first communication apparatus to adjust a discard timer for a first data packet/first data packet set of target importance corresponding to PDCP entity #2 to 15 ms.

For example, S430 may be specifically implemented in the following several manners.

### Manner 1

The first data is data that has reached the PDCP entity. To be specific, the first data is a data packet/data packet set of target importance that has reached a part of or all PDCP entities (namely, the specified PDCP entities or all the PDCP entities) when the first indication information takes effect. In this scenario, the first communication apparatus may restart a discard timer based on the first indication information and the second duration. Alternatively, the first communication apparatus may continue to run the discard timer or determine that the discard timer expires based on the first indication information and the second duration.

In other words, for the data packet/data packet set of target importance that has reached the part of or all PDCP entities when the first indication information takes effect, the first communication apparatus adjusts, when the first indication information takes effect, the discard timer corresponding to the data packet/data packet set.

In an example, when the first indication information takes effect, the first communication apparatus may restart, based on the second duration, a running discard timer for the data packet/data packet set of target importance in the part of or all PDCP entities.

For example, FIG. 5 is a diagram of adjusting duration of a running discard timer. Refer to FIG. 5. Data packet #1 is a data packet of low importance, data packet #2 is a data packet of high importance, and the duration of the discard timer before adjustment is first duration t1. The first indication information indicates to adjust duration of a running discard timer for the data packet of low importance to second duration t2. The first communication apparatus receives the first indication information at moment T0, and the first indication information starts to take effect at moment T0. The first communication apparatus restarts the discard timer at moment T0 based on second duration t2. When the discard timer expires, that is, at moment T1, the first communication apparatus discards data packet #1.

In another example, when the first indication information takes effect, the first communication apparatus may determine whether the running duration of the running discard timer for the data packet/data packet set of target importance in the part of or all PDCP entities is greater than the second duration. If running duration of a discard timer is greater than or equal to the second duration, it is considered that the discard timer expires, and the first communication apparatus may discard a data packet/data packet set corresponding to the discard timer. Otherwise, the first communication apparatus may continue to run the discard timer based on the second duration.

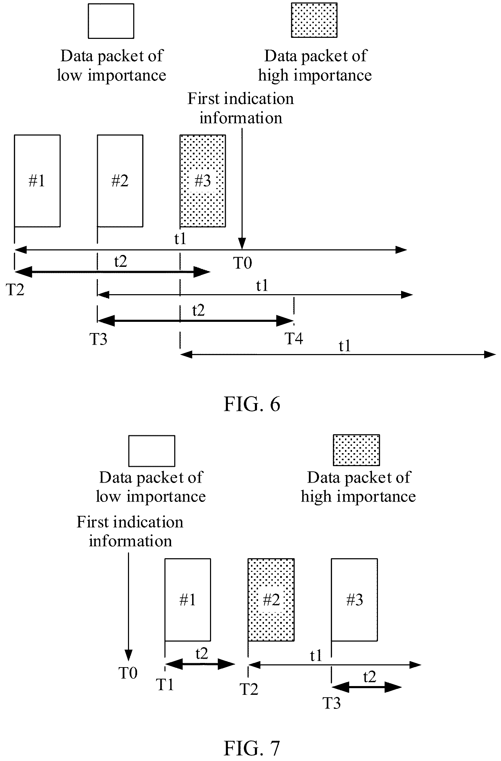

For example, FIG. 6 is a diagram of adjusting duration of a running discard timer. Refer to FIG. 6. Data packet #1 and data packet #2 are data packets of low importance, data packet #3 is a data packet of high importance, and duration of a discard timer before adjustment is first duration t1. The first indication information indicates to adjust duration of a running discard timer for the data packets of low importance to second duration t2. The first communication apparatus receives the first indication information at moment T0, and the first indication information starts to take effect at moment T0. For a discard timer corresponding to data packet #1, the first communication apparatus determines, based on that a start moment of the discard timer is T2 and duration is second duration t2, that the discard timer expires at moment T0, and discards data packet #1. For a discard timer corresponding to data packet #2, the first communication apparatus determines, based on that a start moment of the discard timer is T3 and duration is second duration t2, that the discard timer does not expire at moment T0, and continues to run the discard timer. Then, at moment T4, that is, when the discard timer expires, data packet #2 is discarded.

Optionally, for second data that has not reached the PDCP entity, the first communication apparatus starts the discard timer based on the first duration when the second data reaches the PDCP entity, where the second data is a second data packet or second data packet set of target importance.

In other words, for the data packet/data packet set of target importance that has reached the part of or all PDCP entities when the first indication information takes effect, the first communication apparatus adjusts the discard timer for the data packet/data packet set to the second duration. For a data packet/data packet set of target importance that reaches a part of or all PDCP entities after the first indication information takes effect, the first communication apparatus does not adjust a discard timer for the data packet/data packet set, that is, starts and maintains the discard timer for the data packet/data packet set based on the first duration.

### Manner 2

The first data is data that has not reached the PDCP entity. In this scenario, the first communication apparatus may start and maintain a discard timer based on the first indication information and the second duration when the first data reaches the PDCP entity.

In other words, for the data packet/data packet set of target importance that reaches the part of or all PDCP entities after the first indication information takes effect, the first communication apparatus may start and maintain the discard timer for the data packet/data packet set based on the second duration.

For example, FIG. 7 is a diagram of adjusting duration of a discard timer that is not running. Refer to FIG. 7. Data packet #1 and data packet #3 are data packets of low importance, data packet #2 is a data packet of high importance, and duration of a discard timer before adjustment is first duration t1. The first indication information indicates to adjust duration of a discard timer that is not running for the data packets of low importance to second duration t2. The first communication apparatus receives the first indication information at moment T0. Data packet #1 reaches the PDCP entity at moment T1, the first communication apparatus starts a discard timer corresponding to data packet #1 at moment T1, and duration of the discard timer is second duration t2. Data packet #2 reaches the PDCP entity at moment T2, and the first communication apparatus starts a discard timer corresponding to data packet #2 at moment T2. Because data packet #2 is the data packet of high importance, duration of the discard timer is first duration t1. Data packet #3 reaches the PDCP entity at moment T3, the first communication apparatus starts a discard timer corresponding to data packet #3 at moment T3, and duration of the discard timer is second duration t2.

Optionally, for second data that has reached the PDCP entity, the first communication apparatus starts the discard timer based on the first duration, where the second data is a second data packet or second data packet set of target importance.

In other words, for the data packet/data packet set of target importance that has reached the part of or all PDCP entities when the first indication information takes effect, the first communication apparatus does not adjust the discard timer for the data packet/data packet set, that is, maintains the discard timer for the data packet/data packet set based on the first duration. For the data packet/data packet set of target importance that reaches the part of or all PDCP entities after the first indication information takes effect, the first communication apparatus adjusts the discard timer for the data packet/data packet set to the second duration.

### Manner 3

The first data includes data that has reached and has not reached the PDCP entity. In other words, the first data includes the data packet/data packet set of target importance that has reached the part of or all PDCP entities when the first indication information takes effect and the data packet/data packet set of target importance that reaches the part of or all PDCP entities after the first indication information takes effect.

For the data packet/data packet set of target importance that has reached the part of or all PDCP entities when the first indication information takes effect, the first communication apparatus may adjust the discard timer in Manner 1. For the data packet/data packet set of target importance that reaches the part of or all PDCP entities after the first indication information takes effect, the first communication apparatus may adjust the discard timer in Manner 2.

For example, when network congestion occurs, the second communication apparatus expects the first communication apparatus to discard a data packet/data packet set of low importance. In this case, the second communication apparatus sends the first indication information to the first communication apparatus, to indicate the first communication apparatus to adjust duration of a discard timer for the data packet/data packet set of low importance to 0. After receiving the first indication information, the first communication apparatus adjusts, to 0, discard timers corresponding to all data packets/data packet sets of low importance cached in a related PDCP entity, so that the data packets/data packet sets of low importance are discarded because the discard timers for the data packets/data packet sets of low importance expire immediately. For a data packet/data packet set of low importance that subsequently reaches the related PDCP entity, the first communication apparatus starts a discard timer whose duration is 0, in other words, the data packet/data packet set is immediately discarded after reaching the PDCP entity.

In a possible implementation, the method 400 may further include the following steps.

S440: The second communication apparatus sends the second indication information to the first communication apparatus. Correspondingly, the first communication apparatus receives the second indication information. The second indication information indicates the first communication apparatus to adjust the duration of the discard timer for the first data from the second duration to the first duration.

S450: The first communication apparatus adjusts the duration of the discard timer for the first data from the second duration to the first duration.

For example, based on Manner 2, for the data packet/data packet set of target importance that reaches the part of or all PDCP entities after the first indication information takes effect, the first communication apparatus starts and maintains the discard timer for the data packet/data packet set based on the second duration. After a period of time, the second communication apparatus sends the second indication information to the first communication apparatus. For a data packet/data packet set of target importance that reaches a part of or all PDCP entities after the second indication information takes effect, the first communication apparatus starts and maintains a discard timer for the data packet/data packet set based on the first duration.

For example, the first indication information is sent by the second communication apparatus when network congestion occurs. After the network congestion is alleviated, the second communication apparatus may send the second indication information to the first communication apparatus. In this way, the first communication apparatus adjusts the duration of the discard timer for the first data to the first duration based on the second indication information, so that the first data has a long transmission opportunity.

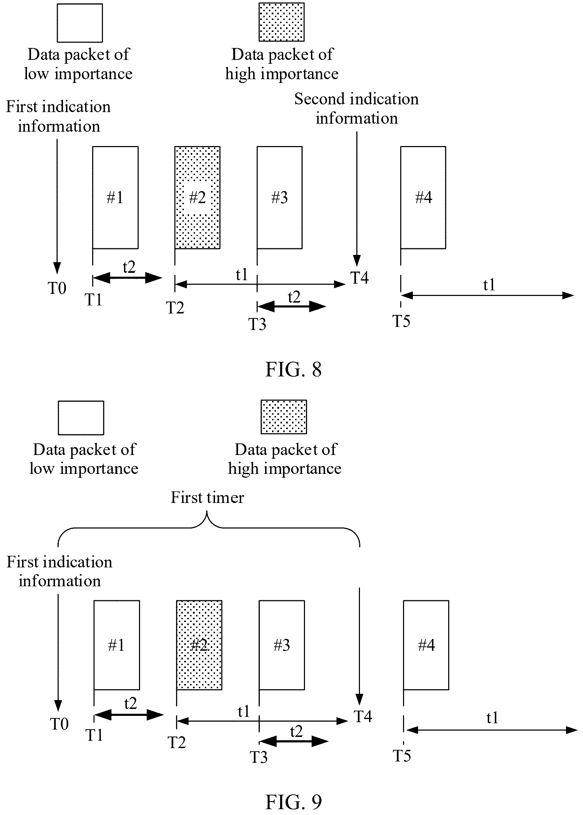

For example, FIG. 8 is a diagram of adjusting duration of a discard timer. On the basis of FIG. 7, data packet #4 is added in FIG. 8. Specific content of discard timers related to data packet #1, data packet #2, and data packet #3 in FIG. 8 is the same as that in FIG. 7. For details, refer to the foregoing descriptions of FIG. 7. Refer to FIG. 8. The second communication apparatus receives the second indication information at moment T4, and data packet #4 of low importance reaches the first communication apparatus at moment T5. The first communication apparatus starts and maintains a discard timer for data packet #4 at moment T5 based on the second indication information and first duration t1.

In a possible implementation, when the first indication information takes effect, the first communication apparatus may further start a timer (for example, denoted as a first timer). The duration of the discard timer for the first data is the second duration during running of the first timer, and the first communication apparatus may adjust the duration of the discard timer for the first data from the second duration to the first duration when the first timer expires.

For example, based on Manner 2, when the first indication information takes effect, the first communication apparatus may start the first timer. For a data packet/data packet set of target importance that reaches a part of or all PDCP entities during running of the first timer, the first communication apparatus starts and maintains a discard timer for the data packet/data packet set based on the second duration. For a data packet/data packet set of target importance that reaches a part of or all PDCP entities after the first timer expires, the first communication apparatus starts and maintains a discard timer for the data packet/data packet set based on the first duration.

For example, duration of the first timer may be predefined, for example, specified in the 3GPP protocol, or may be preconfigured by the network device for the first communication apparatus, for example, configured by using an RRC information element PDCP-config, or may be indicated in a first indication message.

For example, FIG. 9 is a diagram of adjusting duration of a discard timer that is not running. On the basis of FIG. 7, data packet #4 is added in FIG. 9. Specific content of discard timers related to data packet #1, data packet #2, and data packet #3 in FIG. 9 is the same as that in FIG. 7. For details, refer to the foregoing descriptions of FIG. 7. Refer to FIG. 9. At moment T0, the first communication apparatus starts a first timer, and the first timer expires at moment T4. Data packet #4 of low importance reaches the first communication apparatus at moment T5. The first communication apparatus starts and maintains a discard timer for data packet #4 at moment T5 based on the second indication information and first duration t1.

In a possible implementation, the method may further include: The first communication apparatus sends a buffer status report to the second communication apparatus when the first data is discarded, where the buffer status report is used to report an amount of current to-be-transmitted data.

After learning of the amount of the current to-be-transmitted data of the first communication apparatus based on the buffer status report, the second communication apparatus may configure, for the first communication apparatus, transmission resources that match the amount of the current to-be-transmitted data. This facilitates successful transmission of a data packet of the first communication apparatus, and can avoid a waste of network resources.

In a possible implementation, the method may further include: The first communication apparatus sends, when the first data is discarded, specific packet discard information, for example, an SN of the first data, to the second communication apparatus.

After learning of, based on the packet discard information, that the first data has been discarded, the second communication apparatus may adjust a receiving window. For example, the PDCP entity may set, to an SN after the SN of the first data, an SN (a variable RX_DELIV in the 3GPP protocol 38.323) of a next data packet to be delivered to an upper layer. In this way, the PDCP entity of the second communication apparatus does not continue to wait for the first data, but directly processes data whose SN is after the SN of the first data, to avoid a case in which received data cannot be delivered to an application layer in time because of long-time waiting for discarded data.

In a scenario in which the second duration is 0 and the first data is data that has not reached the PDCP entity, in an alternative manner of S430, the first communication apparatus discards the first data at an SDAP layer based on the first indication information.

In a scenario in which the second duration is 0 and the first data includes data that has reached the PDCP entity and data that has not reached the PDCP entity, in an alternative manner of S430, the first communication apparatus adjusts, based on the first indication information, a discard timer for the data that has reached the PDCP entity to 0, and discards the data that has not reached the PDCP entity at an SDAP layer.

Optionally, this manner may alternatively be combined with the foregoing solution related to the second indication information or the first timer.

For example, the first indication information is sent by the second communication apparatus when network congestion occurs. After the network congestion is alleviated, the second communication apparatus may send the second indication information to the first communication apparatus, to indicate the first communication apparatus to adjust the discard timer for the data packet/data packet set of low importance back to the first duration.

A person skilled in the art may understand, based on the foregoing solution, that in a downlink communication scenario, the network device may also adjust duration of a discard timer that is at the PDCP layer and that corresponds to some data. For example, when network congestion occurs, the network device may adjust discard timers for data packets of low importance that have reached and/or have not reached all or specific PDCP entities.

In conclusion, according to the foregoing packet discarding method provided in this application, packet discard processing can be flexibly performed in different scenarios by quickly and flexibly adjusting duration of a discard timer for some data (for example, the first data), to help increase the effective capacity of the network and improve user experience. For example, in a scenario in which network congestion occurs, duration of a discard timer for a data packet/data packet set of low importance is adjusted, so that the data packet/data packet set of low importance can be directly or preferentially discarded, to alleviate network resource pressure, and ensure successful transmission of a data packet/data packet set of high importance.

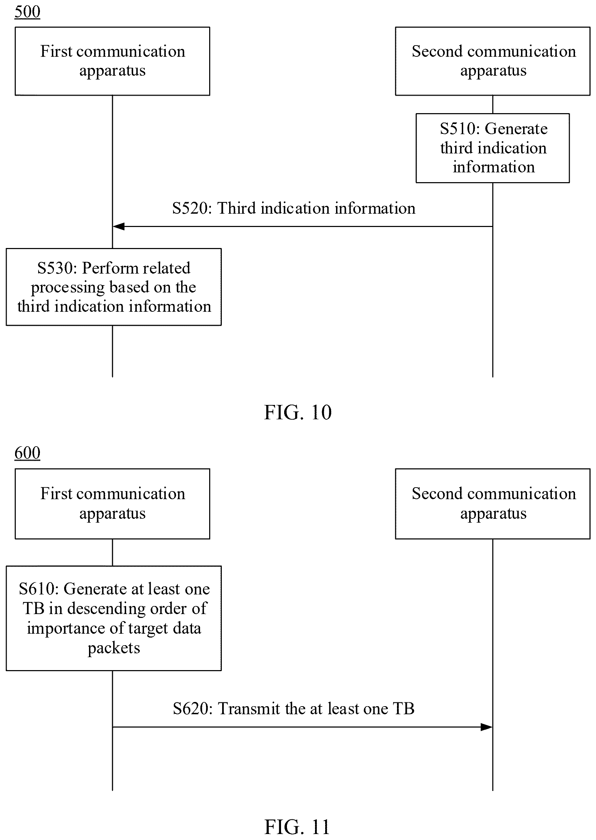

FIG. 10 is a schematic flowchart of a packet discarding method according to this application. The method 500 may include S510 to S530. Each step is described in detail below.

S510: A second communication apparatus generates third indication information.

For example, the third indication information may be a MAC CE or DCI. For example, the third indication information may be a MAC CE in a specific format or DCI in a specific format.

For example, the second communication apparatus may perform S510 when determining that network congestion occurs. For how to determine whether network congestion occurs, refer to the foregoing related descriptions. Details are not described herein again.

S520: The second communication apparatus sends the third indication information to a first communication apparatus. Correspondingly, the first communication apparatus receives the third indication information.

In a first implementation, the third indication information indicates the first communication apparatus to adjust, to 0, a discard timer for a data packet or data packet set of first importance that has reached at least one PDCP entity, and/or discard a data packet or data packet set of first importance that has not reached the at least one PDCP entity.

In a second implementation, the third indication information indicates the first communication apparatus to discard data packets or data packet sets of first importance that have reached and/or have not reached the at least one PDCP entity.

In an example, the at least one PDCP entity may be all PDCP entities. In another example, the at least one PDCP entity may be one or more specified PDCP entities. In this scenario, the third indication information may further include information about the at least one PDCP entity, for example, include an identifier of a DRB corresponding to the at least one PDCP entity.

For how to determine or measure importance of a data packet/data packet set, refer to the manner of determining or measuring the importance of the data packet/data packet set in the method 400. Details are not described herein again.

In an example, the first importance may be low importance. For example, PSI corresponding to the data packet/data packet set is "low" or is less than a specific threshold.

In another example, the third indication information may include information about the first importance, for example, include PSI corresponding to the first importance.

It should be understood that the first indication information indicating that the second duration is 0 in the method 400 may be considered as a possible form of the third indication information.

S530: The first communication apparatus performs related processing based on the third indication information.

Specifically, corresponding to the first implementation described in S520, the first communication apparatus may adjust, to 0 based on the third indication information, a discard timer for the data packet or data packet set of first importance that has reached the at least one PDCP entity, and/or discard the data packet or data packet set of first importance that has not reached the at least one PDCP entity.

For example, in an example, after receiving the third indication information, the first communication apparatus may indicate a protocol layer (for example, an SDAP layer) above a PDCP layer to discard first data, that is, discard data packets/data packet sets of first importance that are to be delivered to the at least one PDCP entity, instead of transferring these data packets/data packet sets to the PDCP layer. In this way, processing time of the first communication apparatus can be further reduced.

In another example, after receiving the third indication information, the first communication apparatus may adjust, to 0, the discard timer for the data packet or data packet set of first importance that has reached the at least one PDCP entity.

In still another example, after receiving the third indication information, the first communication apparatus may adjust, to 0, the discard timer for the data packet or data packet set of first importance that has reached the at least one PDCP entity, and discard, at the SDAP layer, the data packet or data packet set of first importance that has not reached the at least one PDCP entity.

Corresponding to the second implementation described in S520, after receiving the third indication information, the first communication apparatus may discard the data packets or data packet sets of first importance that have reached and/or have not reached the at least one PDCP entity.

For example, in an example, in a scenario in which the third indication information indicates to discard the data packet or data packet set of first importance that has reached the at least one PDCP entity, after receiving the third indication information, the first communication apparatus may directly discard the data packet or data packet set of first importance that has reached the at least one PDCP entity, regardless of whether the discard timer expires.

In another example, in a scenario in which the third indication information indicates to discard the data packet or data packet set of first importance that has not reached the at least one PDCP entity, after the first communication apparatus receives the third indication information, the PDCP entity does not start a discard timer when receiving a data packet or data packet set of first importance that reaches the at least one PDCP entity after the third indication information takes effect, and optionally does not perform processing such as SN allocation on the data packet or data packet set, but directly discards the data packet or data packet set. Alternatively, the discarding operation on the data packet or data packet set of first importance of the at least one PDCP entity may be performed at the SDAP layer.

In still another example, in a scenario in which the third indication information indicates to discard the data packets or data packet sets of first importance that have not reached and have reached the at least one PDCP entity, after receiving the third indication information, the first communication apparatus directly discards the data packet or data packet set of first importance that has reached the at least one PDCP entity, regardless of whether the discard timer expires. The PDCP entity does not start a discard timer when receiving a data packet or data packet set of first importance that reaches the at least one PDCP entity after the third indication information takes effect, and optionally does not perform processing such as SN allocation on the data packet or data packet set, but directly discards the data packet or data packet set. Alternatively, the discarding operation on the data packet or data packet set of first importance of the at least one PDCP entity may be performed at the SDAP layer.

In this manner, the first communication apparatus directly discards the data packet or data packet set of first importance of the at least one PDCP entity, and does not need to start and maintain a discard timer for the data packet or data packet set. This can further reduce processing complexity of the first communication apparatus.

A definition of a moment at which the third indication information starts to take effect is similar to the definition of the moment at which the first indication information starts to take effect in the method 400. For details, refer to the foregoing description of the moment at which the first indication information starts to take effect. Details are not described herein again.

In conclusion, according to the packet discarding method provided in this application, duration of a discard timer for some data (for example, data of low importance) is adjusted to 0 or some data is directly discarded. Therefore, when network congestion occurs, network resource pressure can be alleviated, and successful transmission of other data (for example, data of high importance) can be ensured.

In a possible implementation, the method 500 may also be combined with a similar solution related to the second indication information or the first timer in the method 400.

For example, after the network congestion is alleviated, the second communication apparatus may send fourth indication information to the first communication apparatus, to indicate the at least one PDCP entity of the first communication apparatus to stop discarding the data packet/data packet set of first importance. For another example, when the third indication information takes effect, a timer (for example, denoted as a second timer) may also be started. When the second timer expires, the first communication apparatus stops discarding the data packet/data packet set of first importance.

In a possible implementation, when discarding a related data packet/data packet set, the first communication apparatus may further report an amount of current to-be-transmitted data to the second communication apparatus. The second communication apparatus may configure, for the first communication apparatus based on the amount of the current to-be-transmitted data of the first communication apparatus, transmission resources that match the amount of the current to-be-transmitted data. This facilitates successful transmission of a data packet of the first communication apparatus.

In a possible implementation, the method may further include: The first communication apparatus may further send, when the related data packet/data packet set is discarded, specific packet discard information, for example, an SN of the discarded data packet/data packet set, to the second communication apparatus. After learning of, based on the packet discard information, that the related data packet/data packet set has been discarded, the second communication apparatus may adjust a receiving window. For example, the PDCP entity may set, to an SN after the SN of the discarded data packet/data packet set, an SN (a variable RX_DELIV in the 3GPP protocol 38.323) of a next data packet/data packet set to be delivered to an upper layer. In this way, the PDCP entity of the second communication apparatus does not continue to wait for the discarded data packet/data packet set, but directly processes data whose SN is after the SN of the discarded data packet/data packet set, to avoid a case in which received data cannot be delivered to an application layer in time because of long-time waiting for discarded data.

A person skilled in the art may understand, based on the foregoing solution, that in a downlink communication scenario, a network device may also adjust duration of a discard timer that is at the PDCP layer and that corresponds to some data or directly discard some data.

This application further provides a communication method. In the method, a transmission sequence of data packets is flexibly adjusted, to match different network conditions. This helps increase an effective capacity of a network and improve user experience. The following describes the method in detail.

FIG. 11 is a schematic flowchart of a communication method according to this application. The method 600 may include S610 and S620. Each step is described below.

S610: A first communication apparatus generates at least one TB in descending order of importance of target data packets.

The target data packet may be a data packet associated with a specific DRB, an LCH, or a PDCP, or the target data packet may be data packets associated with all DRBs, LCHs, or PDCPs.

For example, S610 may be implemented in the following several manners.

### Manner 1

When the target data packets reach a PDCP entity, the PDCP entity sequentially allocates sequence numbers (sequence numbers, SNs) in descending order of importance of the target data packets. In other words, the PDCP entity first allocates an SN to a data packet of high importance, and then allocates an SN to a data packet of low importance. In this manner, the SN of the data packet of high importance is ranked before the SN of the data packet of low importance. Therefore, the data packet of high importance is first processed and delivered to a lower layer, and then is in a front position when being mapped to a TB.

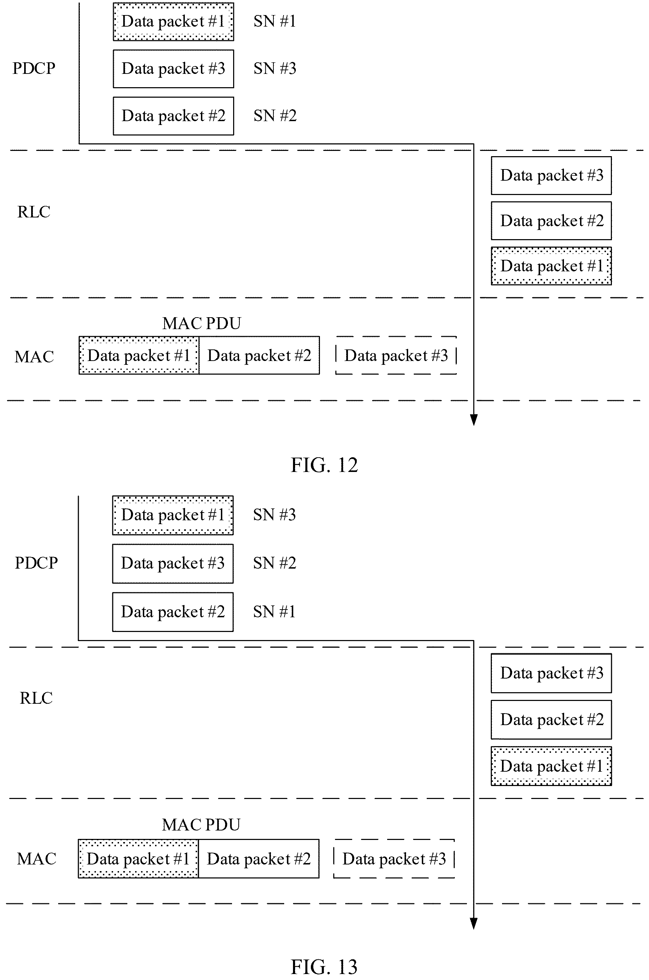

For example, FIG. 12 is a diagram of allocating an SN by a PDCP entity to a data packet. Refer to FIG. 12. Data packet #1 is a data packet of high importance, data packet #2 and data packet #3 are data packets of low importance, and data packet #2, data packet #3, and data packet #1 successively reach a PDCP entity. The PDCP entity first allocates an SN (namely, SN #1) to data packet #1, then allocates an SN (namely, SN #2) to data packet #2, and finally allocates an SN (namely, SN #3) to data packet #3. The PDCP entity delivers data packets to an RLC entity based on a sequence of data packet #1, data packet #2, and data packet #3. Then, the RLC entity delivers the data packets to a MAC entity based on a sequence of data packet #1, data packet #2, and data packet #3. The MAC entity assembles a MAC PDU based on a sequence of data packet #1, data packet #2, and data packet #3, and then delivers the MAC PDU to a PHY layer.

### Manner 2

The target data packets are still processed in a reaching sequence at a PDCP entity, and the PDCP entity sequentially delivers the target data packets to an RLC entity in descending order of importance of the data packets. In other words, the PDCP entity first delivers a data packet of high importance to the RLC entity, and then delivers a data packet of low importance to the RLC entity. In this manner, the RLC entity first receives and processes the data packet of high importance, so that the data packet of high importance is in a front position when being mapped to a TB.

For example, FIG. 13 is a diagram of delivering a data packet by a PDCP entity to an RLC entity. Refer to FIG. 13. Data packet #1 is a data packet of high importance, data packet #2 and data packet #3 are data packets of low importance, and data packet #2, data packet #3, and data packet #1 successively reach a PDCP entity. The PDCP entity sequentially allocates SNs, namely, SN#1, SN#2, and SN#3, to data packet #2, data packet #3, and data packet #1. The PDCP entity sequentially delivers data packet #1, data packet #2, and data packet #3 to an RLC entity in descending order of importance of the data packets. Then, the RLC entity delivers the data packets to a MAC entity based on a sequence of data packet #1, data packet #2, and data packet #3. The MAC entity assembles a MAC PDU based on a sequence of data packet #1, data packet #2, and data packet #3, and then delivers the MAC PDU to a PHY layer.

### Manner 3

The target data packets are still processed in a reaching sequence at a PDCP entity and an RLC entity, and the RLC entity sequentially delivers the target data packets to a MAC entity in descending order of importance of the data packets. In other words, the RLC entity first delivers a data packet of high importance to the MAC entity, and then delivers a data packet of low importance to the MAC entity. In this manner, the data packet of high importance can be first mapped to a TB.

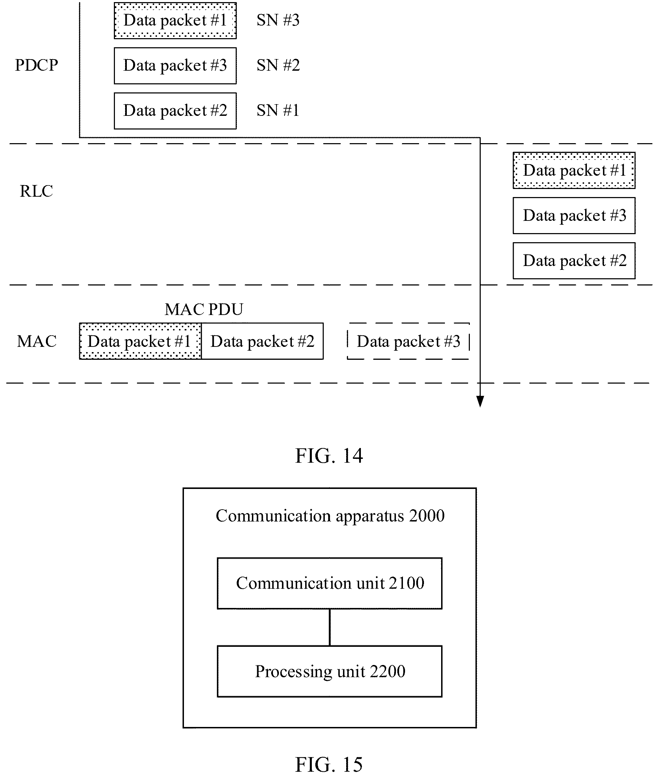

For example, FIG. 14 is a diagram of delivering a data packet by an RLC entity to a MAC entity. Refer to FIG. 14. Data packet #1 is a data packet of high importance, data packet #2 and data packet #3 are data packets of low importance, and data packet #2, data packet #3, and data packet #1 successively reach a PDCP entity. The PDCP entity sequentially allocates SNs, namely, SN#1, SN#2, and SN#3, to data packet #2, data packet #3, and data packet #1. The PDCP entity sequentially delivers data packet #2, data packet #3, and data packet #1 to an RLC entity in ascending order of SNs. Then, the RLC entity sequentially delivers data packet #1, data packet #2, and data packet #3 to a MAC entity in descending order of importance of the data packets. The MAC entity assembles a MAC PDU based on a sequence of data packet #1, data packet #2, and data packet #3, and then delivers the MAC PDU to a PHY layer.

It should be understood that FIG. 12 to FIG. 14 merely briefly describe a sequence of delivering/assembling data packets by a related protocol layer or a sequence of allocating SNs to data packets by a related protocol layer. For other processing that further needs to be performed on the data packet by each layer, refer to the conventional technology. Details are not described in this application.

S620: The first communication apparatus sends the at least one TB to the second communication apparatus. Correspondingly, the second communication apparatus receives the at least one TB.

According to the method provided in this application, the first communication apparatus preferentially maps the data packet of high importance, to ensure that transmission of the data packet of high importance is preferentially ensured when resources are limited. The data packet of low importance is not directly discarded, but is transmitted on remaining resources in a best-effort manner. The data packet is discarded only after a delay budget is exhausted. In this manner, transmission of the data packet of high importance is ensured, and a part of data packets of low importance are reserved in a best-effort manner, so that user experience is better.

The method 600 may be applied to an uplink communication scenario, a downlink communication scenario, and an SL communication scenario. When the method is applied to the uplink communication scenario or the SL communication scenario, the method 600 may further include the following optional embodiments.

In an example, the second communication apparatus may indicate, to the first communication apparatus, a DRB, an LCH, or a PDCP entity corresponding to the target data packet. For example, the second communication apparatus may indicate, by using an RRC message, a MAC CE, or DCI, the DRB, the LCH, or the PDCP entity corresponding to the target data packet.

In an example, the second communication apparatus may send first indication information to the first communication apparatus, where the first indication information may indicate the first communication apparatus to generate the at least one TB in descending order of importance of the target data packets. For example, the first indication information may be a MAC CE or DCI.

For example, when network congestion occurs, the second communication apparatus may send the first indication information to the first communication apparatus.

Optionally, the second communication apparatus may further send second indication information to the first communication apparatus after a period of time, where the second indication information may indicate the first communication apparatus to generate the TB based on a sequence in which the target data packets reach the protocol layers.

For example, after the network congestion is alleviated or disappears, the second communication apparatus may send the second indication information to the first communication apparatus.

Optionally, when receiving the first indication information, the first communication apparatus may further start a timer (for example, denoted as a first timer). The first communication apparatus generates the TB in descending order of importance of the target data packets during running of the first timer, and generates, after the first timer expires, the TB based on a sequence in which the target data packets reach the protocol layers.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

FIG. 15 is a block diagram of a communication apparatus according to an embodiment of this application. As shown in FIG. 15, the communication apparatus 2000 may include a communication unit 2100 and a processing unit 2200. The communication unit 2100 may implement a corresponding communication function. The communication may be internal communication of the communication apparatus 2000 or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, to enable the apparatus to implement the foregoing method embodiments.

In a possible design, the communication apparatus 2000 may be the first communication apparatus in the method 400, or may be a module or a chip used in the first communication apparatus. The communication apparatus 2000 may be configured to perform steps or procedures performed by the first communication apparatus in the foregoing embodiments.

Specifically, the communication unit 2100 is configured to receive first indication information from a second communication apparatus, where the first indication information indicates to adjust duration of a discard timer that is at a packet data convergence protocol PDCP layer and that corresponds to first data to second duration, and the first data is a first data packet or first data packet set of target importance; and the processing unit 2200 is configured to adjust the duration of the discard timer from first duration to the second duration based on the first indication information.

Optionally, the first data is a first data packet of low importance or a first data packet set of low importance, and the first duration is greater than the second duration.

Optionally, importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

Optionally, the first indication information indicates that the second duration is a default value 0; or the first indication information includes the second duration; or the first indication information indicates the second duration in a plurality of pieces of preconfigured duration; or the first indication information includes information about the target importance and the second duration; or the first indication information includes information about the target importance, and the second duration is associated with the target importance.

Optionally, the processing unit 2200 is specifically configured to adjust the duration of the discard timer from the first duration to the second duration based on PSI of the target importance and a PSI threshold.

Optionally, the first indication information further indicates a data radio bearer DRB associated with the first data.

Optionally, the first data is data that has reached a PDCP entity, and the processing unit 2200 is specifically configured to: restart the discard timer based on the first indication information and the second duration; or continue to run the discard timer based on the first indication information and the second duration, or determine, based on the first indication information and the second duration, that the discard timer expires.

Optionally, the first data is data that has not reached the PDCP entity, and the processing unit 2200 is specifically configured to start the discard timer based on the first indication information and the second duration when the first data reaches the PDCP entity.

Optionally, the processing unit 2200 is further configured to: for second data that has not reached the PDCP entity, start the discard timer based on the first duration when the second data reaches the PDCP entity, where the second data is a second data packet or second data packet set of target importance.

Optionally, the communication unit 2100 is further configured to receive second indication information from the second communication apparatus, where the second indication information indicates to adjust the duration of the discard timer from the second duration to the first duration; and the processing unit 2200 is further configured to adjust the duration of the discard timer from the second duration to the first duration.

Optionally, the processing unit 2200 is further configured to: start a first timer when the first indication information is received, where the duration of the discard timer is the second duration during running of the first timer; and adjust the duration of the discard timer from the second duration to the first duration when the first timer expires.

Optionally, the communication unit 2100 is further configured to send a buffer status report to the second communication apparatus when the first data is discarded, where the buffer status report is used to report an amount of current to-be-transmitted data.

In another possible design, the communication apparatus 2000 may be the second communication apparatus in the foregoing method, or may be a module or a chip used in the second communication apparatus. The communication apparatus 2000 may be configured to perform steps or procedures performed by the second communication apparatus in the foregoing method embodiments.

Specifically, the processing unit 2200 is configured to generate first indication information, where the first indication information indicates the first communication apparatus to adjust duration of a discard timer that is at a packet data convergence protocol PDCP layer and that corresponds to first data to second duration, and the first data is a first data packet or first data packet set of target importance; and the communication unit 2100 is configured to send the first indication information to the first communication apparatus.

Optionally, the first data is a first data packet of low importance or a first data packet set of low importance, and the second duration is less than current duration of the discard timer.

Optionally, importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

Optionally, the first indication information indicates that the second duration is a default value 0; or the first indication information includes the second duration; or the first indication information indicates the second duration in a plurality of pieces of preconfigured duration; or the first indication information includes information about the target importance and the second duration; or the first indication information includes information about the target importance, and the second duration is associated with the target importance.

Optionally, the first indication information further indicates a data radio bearer DRB associated with the first data.

Optionally, the communication unit 2100 is further configured to send second indication information to the first communication apparatus, where the second indication information indicates the first communication apparatus to adjust the duration of the discard timer from the second duration to the first duration, and the first duration is duration of the discard timer before the duration of the discard timer is adjusted to the second duration.

Optionally, the communication unit 2100 is further configured to receive a buffer status report from the first communication apparatus, where the buffer status report is used to report an amount of current to-be-transmitted data of the first communication apparatus.

Optionally, the communication unit 2100 is further configured to send duration of a first timer to the first communication apparatus, where the duration of the discard timer is the second duration during running of the first timer, the first communication apparatus needs to adjust the duration of the discard timer from the second duration to the first duration when the first timer expires, and the first duration is duration of the discard timer before the duration of the first timer is adjusted to the second duration.

Optionally, before generating the first indication information, the communication apparatus further includes: determining that network congestion occurs.

For details of steps or procedures performed by the units in the communication apparatus 2000, refer to the method 400. Details are not described herein again.

It should be understood that the communication apparatus 2000 may further perform operations performed by the first communication apparatus or the second communication apparatus in the method 500 or the method 600. For details about steps or procedures performed by the units in the communication apparatus 2000, refer to the method 500 or the method 600. Details are not described herein again.

It should be understood that, the "unit" in the communication apparatus 2000 may be implemented by hardware, or may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. For another example, the communication unit 2100 may be replaced with a transceiver or a transceiver circuit (which may include, for example, a receiver circuit and a transmitter circuit), and the processing unit 2200 may be replaced with a processor or a processing circuit.

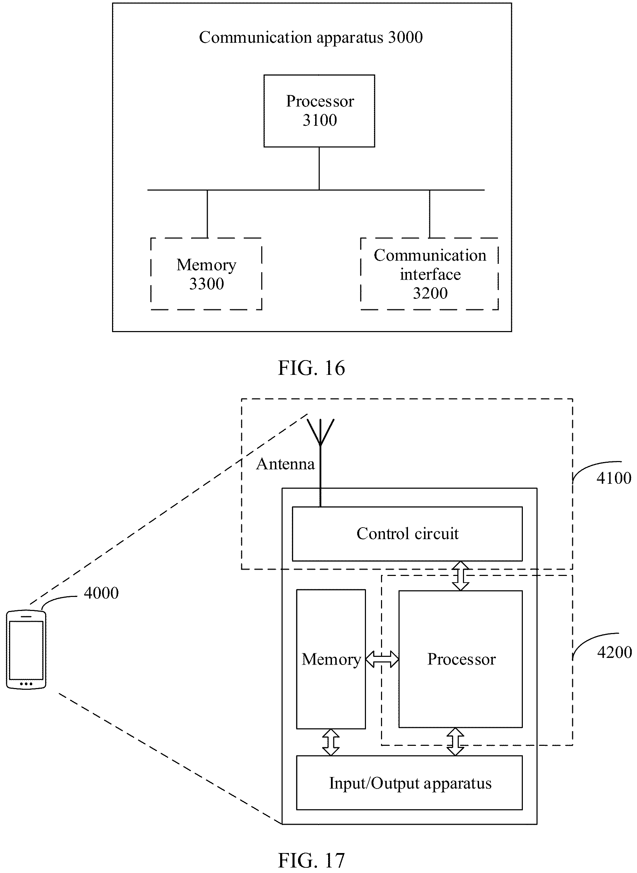

FIG. 16 is a block diagram of another communication apparatus 3000 according to an embodiment of this application. The apparatus 3000 may be a first communication apparatus or a second communication apparatus, or may be a chip, a chip system, a processor, or the like that supports the first communication apparatus or the second communication apparatus in implementing the foregoing method. The apparatus may be configured to implement the methods described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like, for example, may be a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, to enable the apparatus 3000 to perform the methods described in the foregoing method embodiments.

In another optional design, the apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300. The memory 3300 may store instructions. The instructions may be run on the processor 3100, to enable the apparatus 3000 to perform the methods described in the foregoing method embodiments. Optionally, the memory 3300 may further store data. Optionally, the processor 3100 may also store instructions and/or data. The processor 3100 and the memory 3300 may be separately disposed, or may be integrated together.

FIG. 17 is a diagram of a structure of a terminal device 4000 according to this application. The communication apparatus 2000 or the communication apparatus 3000 may be configured in the terminal device 4000. Alternatively, the communication apparatus 2000 or the communication apparatus 3000 may be the terminal device 4000. In other words, the terminal device 4000 may perform actions performed by the terminal device in the foregoing method embodiments. Optionally, for ease of description, FIG. 17 shows only main components of the terminal device. As shown in FIG. 17, the terminal device 4000 includes a processor, a memory, a control circuit, an antenna, and an input/output apparatus.

The processor is mainly configured to: process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to convert a baseband signal and a radio frequency signal and process the radio frequency signal. The control circuit and the antenna may be collectively referred to as a transceiver, and are mainly configured to receive and send a radio frequency signal in a form of an electromagnetic wave. The input/output apparatus, like a touchscreen, a display, or a keyboard, is mainly configured to: receive data entered by a user and output data to the user.

After the terminal device is powered on, the processor may read the software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 17 shows only one memory and one processor. An actual terminal device may include a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected through a bus or by using another technology. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 4100 of the terminal device 4000, and the processor that has a processing function may be considered as a processing unit 4200 of the terminal device 4000. As shown in FIG. 17, the terminal device 4000 includes the transceiver unit 4100 and the processing unit 4200. The transceiver unit may also be referred to as a transceiver, a transceiver machine, a transceiver apparatus, or the like. Optionally, a component configured to implement a receiving function in the transceiver unit 4100 may be considered as a receiving unit, and a component configured to implement a sending function in the transceiver unit 4100 may be considered as a sending unit. That is, the transceiver unit 4100 includes the receiving unit and the sending unit. For example, the receiving unit may also be referred to as a receiver, a receiver machine, a receiving circuit, or the like, and the sending unit may also be referred to as a transmitter, a transmitter machine, a transmitting circuit, or the like.

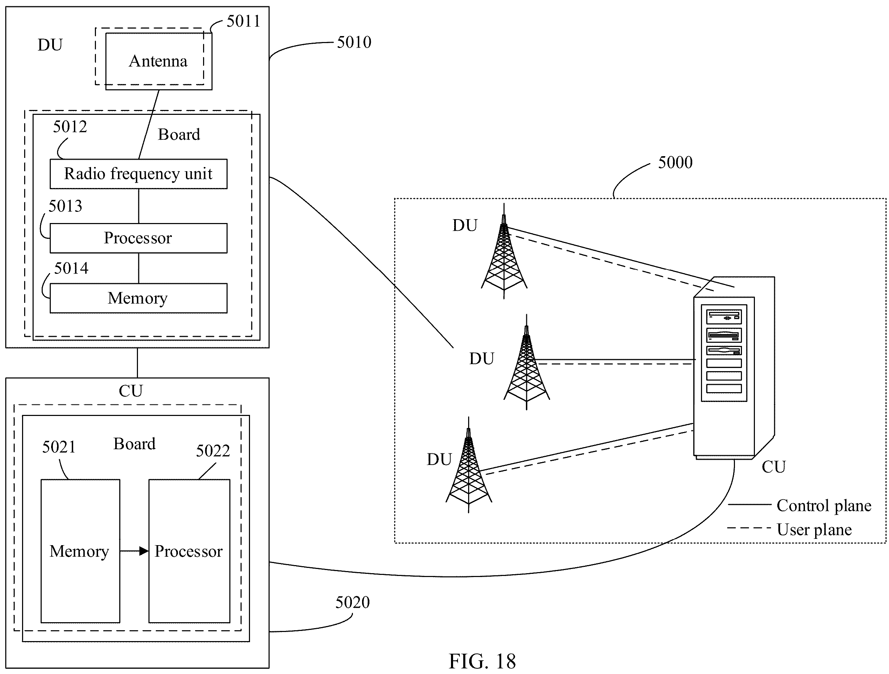

FIG. 18 is a diagram of a structure of a network device 5000 according to an embodiment of this application. The communication apparatus 2000 or the communication apparatus 3000 may be configured in the network device 5000. Alternatively, the communication apparatus 2000 or the communication apparatus 3000 may be the network device 5000. Alternatively, the network device 5000 may perform an action performed by the network device (for example, when the foregoing method is applied to an uplink scenario, the second communication apparatus is the network device) in the foregoing method embodiments.

As shown in FIG. 18, the network device 5000 may include one or more DUs 5010 and one or more CUs 5020. The CU 5020 may communicate with an NG core (next generation core network, NC). The DU 5010 may include at least one antenna 5011, at least one radio frequency unit 5012, at least one processor 5013, and at least one memory 5014. The DU 5010 is mainly configured to: receive and send a radio frequency signal, convert a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to: perform baseband processing, control the network device 5000, and the like. The DU 5010 and the CU 5020 may be physically disposed together, or may be physically separated, namely, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to the first device or the second device in the foregoing method embodiments.

Specifically, baseband processing of the CU and the DU may be divided based on a protocol layer of a wireless network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio frequency units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may separately support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may be further disposed on each board. The DU 5010 may include one or more boards. A plurality of boards may jointly support a radio access network (for example, a 5G network) of a single access standard, or may separately support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may be further disposed on each board.

It should be understood that the network device 5000 shown in FIG. 18 can implement processes related to actions performed by the second communication apparatus in the foregoing method embodiments. Operations and/or functions of modules in the network device 5000 are respectively for implementing corresponding procedures in the foregoing method embodiments. For details, refer to the descriptions in the foregoing method embodiments. To avoid repetition, detailed descriptions are properly omitted herein.

It should be understood that the network device 5000 shown in FIG. 18 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

It should be understood that, in a possible design, steps in the method embodiments provided in this application may be completed by using a hardware integrated logic circuit in a processor or by using instructions in a form of software. The steps of the method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. During implementation, steps in the foregoing method embodiments may be completed by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform the steps or procedures performed by the first communication apparatus or the second communication apparatus in any one of the foregoing method embodiments.

This application further provides a computer-readable storage medium. The computer-readable storage medium stores program code. When the program code is run on a computer, the computer is enabled to perform the steps or procedures performed by the first communication apparatus or the second communication apparatus in any one of the foregoing method embodiments.

This application further provides a communication apparatus, including a processor and an interface. The interface is configured to send and/or receive a signal, so that the processor performs the steps or procedures performed by the first communication apparatus or the second communication apparatus in any one of the foregoing method embodiments.

This application further provides a communication system, including at least one of a first communication apparatus and a second communication apparatus.

The foregoing apparatus embodiments completely correspond to the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement same or similar functions in an existing or future protocol.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a computing device and an application that runs on the computing device may be components. One or more components may reside within a process and/or an execution thread, and a component may be located on one computer and/or distributed between two or more computers. In addition, these components may be executed from various computer-readable storage media that store various data structures. For example, the components may communicate through a local and/or remote process and based on a signal having one or more data packets (for example, data from two components interacting with another component in a local system, a distributed system, and/or a network, like an internet interacting with another system through the signal).

A person of ordinary skill in the art may be aware that, in combination with illustrative logical blocks (illustrative logical blocks) and steps (steps) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

In the foregoing embodiments, all or a part of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet discarding method, applied to a first communication apparatus, wherein the method comprises:
receiving first indication information from a second communication apparatus, wherein the first indication information indicates that duration of a discard timer that is at a packet data convergence protocol PDCP layer and that corresponds to first data is second duration, the second duration is one of a plurality of pieces of preconfigured duration, and the first data is a first data packet or first data packet set of target importance; and
starting, for the first data based on the first indication information, the discard timer whose duration is the second duration.

2. The method according to claim 1, wherein the first data is a first data packet of low importance or a first data packet set of low importance.

3. The method according to claim 1 or 2, wherein importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

4. The method according to any one of claims 1 to 3, wherein the starting, for the first data based on the first indication information, the discard timer whose duration is the second duration comprises:
starting, for the first data based on PSI of the target importance and a PSI threshold, the discard timer whose duration is the second duration.

5. The method according to any one of claims 1 to 4, wherein the first indication information further indicates a data radio bearer DRB associated with the first data.

6. The method according to any one of claims 1 to 5, wherein the first data is data that has not reached a PDCP entity, and the starting, for the first data based on the first indication information, the discard timer whose duration is the second duration comprises:
starting, for the first data based on the first indication information when the first data reaches the PDCP entity, the discard timer whose duration is the second duration.

7. The method according to any one of claims 1 to 6, wherein the method further comprises:
for second data that has not reached the PDCP entity, when the second data reaches the PDCP entity, starting, for the second data, a discard timer whose duration is first duration, wherein the second data is a second data packet or second data packet set of other target importance.

8. The method according to any one of claims 1 to 7, wherein the method further comprises:
receiving second indication information from the second communication apparatus, wherein the second indication information indicates to start, for the first data, the discard timer whose duration is the first duration; and
starting, for the first data based on the second indication information, the discard timer whose duration is the first duration.

9. The method according to any one of claims 1 to 7, wherein the method further comprises:
starting a first timer when the first indication information is received, and starting, for the first data during running of the first timer, the discard timer whose duration is the second duration; and
starting, for the first data when the first timer expires, the discard timer whose duration is the first duration.

10. The method according to any one of claims 7 to 9, wherein the first duration is greater than the second duration.

11. The method according to any one of claims 1 to 10, wherein the method further comprises:
sending a buffer status report to the second communication apparatus when the first data is discarded, wherein the buffer status report is used to report an amount of current to-be-transmitted data.

12. A packet discarding method, applied to a second communication apparatus, wherein the method comprises:
generating first indication information, wherein the first indication information indicates that duration of a discard timer that is at a packet data convergence protocol PDCP layer and that corresponds to first data is second duration, and the first data is a first data packet or first data packet set of target importance; and
sending the first indication information to a first communication apparatus.

13. The method according to claim 12, wherein the first data is a first data packet of low importance or a first data packet set of low importance, and the second duration is less than current duration of the discard timer.

14. The method according to claim 12 or 13, wherein importance of any data packet is determined based on protocol data unit PDU set importance PSI corresponding to the data packet and/or a remaining transmission delay budget corresponding to the data packet; and/or importance of any data packet set is determined based on PSI corresponding to the data packet set and/or a remaining transmission delay budget corresponding to the data packet set.

15. The method according to any one of claims 12 to 14, wherein the first indication information further indicates a data radio bearer DRB associated with the first data.

16. The method according to any one of claims 12 to 15, wherein the method further comprises:
sending second indication information to the first communication apparatus, wherein the second indication information indicates that the duration of the discard timer for the first data is first duration.

17. The method according to any one of claims 12 to 16, wherein the method further comprises:
receiving a buffer status report from the first communication apparatus, wherein the buffer status report is used to report an amount of current to-be-transmitted data of the first communication apparatus.

18. The method according to any one of claims 12 to 17, wherein the method further comprises:
sending duration of a first timer to the first communication apparatus, wherein the duration of the discard timer for the first data is the second duration during running of the first timer, and the duration of the discard timer is the first duration when the first timer expires.

19. The method according to claim 16 or 18, wherein the first duration is greater than the second duration.

20. The method according to claim 12, wherein before the generating the first indication information, the method further comprises:
determining that network congestion occurs.

21. A communication apparatus, comprising units configured to perform steps of the method according to any one of claims 1 to 11, or comprising units configured to perform steps of the method according to any one of claims 12 to 20.

22. A communication apparatus, comprising a processor, wherein the processor is coupled to a memory, the memory is configured to store a program or instructions, and when the program or the instructions are executed by the processor, the apparatus is enabled to perform the method according to any one of claims 1 to 12 or the method according to any one of claims 12 to 20.

23. A communication apparatus, comprising a processor and an interface, wherein the interface is configured to send and/or receive a signal, so that the processor performs the method according to any one of claims 1 to 11 or the method according to any one of claims 12 to 20.

24. A readable storage medium, wherein the readable storage medium stores a computer program or instructions, and when the computer program or the instructions are executed, the computer is enabled to perform the method according to any one of claims 1 to 11 or the method according to any one of claims 12 to 20.

25. A computer program product, comprising computer program instructions, wherein the computer program instructions enable the computer to perform the method according to any one of claims 1 to 11 or the method according to any one of claims 12 to 20.
